(19) Europäisches Patentamt
European Patent Office
Office européen des brevets

(11) EP 1 218 104 B1

(12) **FASCICULE DE BREVET EUROPEEN**

(45) Date de publication et mention de la délivrance du brevet:
**18.10.2006 Bulletin 2006/42**

(21) Numéro de dépôt: **00958739.5**

(22) Date de dépôt: **25.08.2000**

(51) Int Cl.:
***B01J 45/00*** *(2006.01)* ***G21F 9/12*** *(2006.01)*

(86) Numéro de dépôt international:
**PCT/FR2000/002374**

(87) Numéro de publication internationale:
**WO 2001/015806 (08.03.2001 Gazette 2001/10)**

# (54) PROCEDE ET INSTALLATION D'ELIMINATION DES CATIONS METALLIQUES D'UN LIQUIDE PAR DES RESINES DE POLYAZACYCLOALCANES GREFFEES SUR UN SUPPORT

VERFAHREN UND ANLAGE ZUR ENTFERNUNG VON METALLISCHEN KATIONEN AUS EINER FLÜSSIGKEIT DURCH AUF EINEM TRÄGER GEPROFTE POLYAZACYCLOALKANHARZE

METHOD AND INSTALLATION FOR ELIMINATING METAL CATIONS FROM A LIQUID WITH POLYAZACYCLOALKANE RESINS GRAFTED ON A SUPPORT

(84) Etats contractants désignés:
**AT BE DK FI FR SE**

(30) Priorité: **27.08.1999 FR 9910861**

(43) Date de publication de la demande:
**03.07.2002 Bulletin 2002/27**

(73) Titulaires:
- **Commissariat à l'Energie Atomique
75752 Paris Cedex 15 (FR)**
- **Centre National de la Recherche Scientifique
75794 Paris Cedex 16 (FR)**

(72) Inventeurs:
- **Chollet, Hervé
21000 Dijon (FR)**
- **Babouhot, Jean-Louis
21121 Fontaine lès Dijon (FR)**
- **Barbette, Frédéric
52190 Vaux sous Aubigny (FR)**
- **Guilard, Roger
21121 Fontaine lès Dijon (FR)**

(74) Mandataire: **Audier, Philippe André et al
Brevatome,
3, rue du Docteur Lancereaux
75008 Paris (FR)**

(56) Documents cités:
**WO-A-96/11056**
**DE-A- 4 021 046**
**FR-A- 2 725 552**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 218 104 B1

## Description

L'invention concerne un procédé et une installation d'élimination des cations métalliques d'un liquide utilisant des résines échangeuses d'ions chélatantes constituées d'un polyazacycloalcane greffé sur un support.

Lesdits cations métalliques peuvent être des métaux lourds, tels que le cuivre, le zinc, le tantale ou l'or, et sont plus particulièrement des cations d'éléments radioactifs de la famille des actinides ou des lanthanides et la présente invention s'applique ainsi, plus particulièrement, à la décontamination totale des effluents aqueux contaminés alpha.

Afin de limiter strictement la production de déchets nucléaires et de préserver l'environnement, les effluents des usines de retraitement du combustible irradié, ainsi que les effluents des centres de recherche nucléaire doivent respecter des normes de rejet relatives aux effluents liquides, qui sont de plus en plus draconiennes.

Ainsi, par exemple, le centre du CEA (COMMISSARIAT A L'ENERGIE ATOMIQUE) de VALDUC doit respecter les normes de rejets suivantes, pour ce qui concerne les effluents liquides :

L'activité de l'effluent doit être nulle ; les limites de détection des techniques d'analyses radiologiques étant de 2 $Bq/m^3$.

Les rejets sous forme liquide sont interdits, seule l'évaporation des effluents peut donc être envisagée.

Le cycle de traitement actuel des effluents du centre de VALDUC comporte plusieurs étapes selon le niveau d'activité radiologique des effluents. On distingue des effluents de forte activité et des effluents de faible activité. En fonction de son activité, chaque effluent va rejoindre un lieu de traitement différent.

Les effluents de forte activité subissent une réaction de précipitation-floculation qui est suivie d'une filtration. Les boues de filtration sont envoyées au stockage, alors qu'une partie des filtrats dont la charge en sels est supérieure à 80 $kg/m^3$ est « surconcentrée ». Les distillats obtenus en réalisant cette « surconcentration » vont rejoindre le circuit de traitement des effluents de faible activité, alors que les « surconcentrats » sont stockés. Les boues de filtration et « surconcentrats » sont enrobés dans du béton et évacués pour stockage définitif.

Les effluents de faible activité, ainsi que les filtrats dont la charge en sels est inférieure à 80 $kg/m^3$ et les distillats issus des effluents de forte activité vont subir une évaporation sous pression réduite dans un évaporateur industriel, c'est-à-dire une colonne à plateaux, dans laquelle on réalise une distillation sous pression réduite. On parvient, grâce à cette technique, à appauvrir des effluents à faible contamination $\alpha$, c'est-à-dire, par exemple, pour le centre du CEA (COMMISSARIAT A L'ENERGIE ATOMIQUE) de VALDUC, des effluents ayant une contamination inférieure à $1,5.10^7$ $Bq/m^3$ en éléments $\alpha$ et inférieure à 50 g/l en charge saline.

On obtient, à l'issue de l'évaporation, d'une part, un concentrat contenant la quasi-totalité de l'activité $\alpha$ et une charge saline de l'ordre de 300 g/l. Ce concentrat est mélangé aux effluents de forte activité sur le lieu du stockage, afin d'être traité et conditionné ultérieurement, par exemple, dans du béton. On obtient, d'autre part, des évaporats qui constituent 90 % de la phase aqueuse des effluents traités, jusqu'à une activité de 300 à 500 $Bq/m^3$, et qui doivent subir un traitement ultime de microfiltration pour diminuer l'activité résiduelle en dessous des normes de rejet indiquées ci-dessus : à savoir, activité nulle et interdiction des rejets liquides. Si ces normes ne sont pas respectées, alors les effluents incriminés sont réinjectés dans le circuit de traitement.

La décontamination ultime, réalisée par microfiltration, engendre des déchets et ne permet pas de traiter tous les radioéléments en une seule étape, en effet, cette technique ne sépare que les particules solides et ne permet pas l'élimination des métaux présents dans la fraction soluble de l'effluent.

Il serait donc intéressant de disposer d'un procédé permettant la décontamination ultime à l'issue de l'étape d'évaporation, c'est-à-dire le traitement des évaporats issus de la tour d'évaporation industrielle en vue d'éliminer les dernières traces en éléments émetteurs $\alpha$, ce procédé ne présentant pas les inconvénients du traitement par microfiltration.

Par ailleurs, il serait également intéressant de mettre au point un procédé permettant de traiter les effluents en amont de l'évaporateur industriel. En effet, le traitement par évaporation ne permet pas d'atteindre directement une activité nulle, ce qui nécessite précisément le traitement ultime décrit plus haut, et cette technique d'évaporation est lourde à mettre en oeuvre et relativement coûteuse en énergie. Il serait donc utile de remplacer éventuellement la tour d'évaporation, tout en obtenant des effluents dont l'activité est conforme aux normes ci-dessus.

L'extraction des métaux lourds, des actinides et notamment de l'uranium, du plutonium et de l'américium a donné lieu à un grand nombre de recherches. Des dérivés « éthers-couronnes » non solubles dans l'eau et fixés sur de la silice ont été utilisés dans des procédés d'extraction pour extraire notamment le plomb, voir, par exemple, le brevet US-A-4 943 375. De même, ces dérivés d'éthers-couronnes ont également été mis en oeuvre dans un procédé d'adsorption sur résine, voir, par exemple, la demande de brevet EP-A-0 433 175. Ce procédé permet de récupérer une partie du plutonium à partir de solutions concentrées de produits de fission ou d'effluents des installations de retraitement. Toutefois, un tel procédé ne permet pas d'aboutir aux valeurs des normes de rejet recherchées.

Afin de remédier à ces problèmes, le document FR-A-2 725 552 propose un procédé de décontamination partielle $\alpha$ d'un effluent aqueux contenant au moins un élément polluant choisi parmi le cuivre, le zinc, le tantale, l'or, les actinides ou les lanthanides. Ce procédé consiste à mettre en contact ledit effluent aqueux avec un gel de silice et

à séparer ledit effluent gazeux décontaminé et le gel de silice ayant fixé au moins l'un desdits éléments polluants ; l'effluent à traiter ayant un pH supérieur ou égal à 3.

Ce procédé permet de réaliser une décontamination efficace, mais seulement très partielle, des éléments polluants. Très peu d'indications relatives au mode opératoire sont données, notamment en ce qui concerne un éventuel conditionnement préalable de la résine.

Le recours à des agents complexants et également une voie intéressante pour apporter une solution au traitement ultime de décontamination des effluents de faible activité issus des tours d'évaporation et/ou pour remplacer ces tours.

On connaît déjà, d'après l'art antérieur, des composés macrocycliques ayant d'excellentes propriétés complexantes vis-à-vis des cations, des anions ou même des molécules neutres. Ainsi, le document FR-2 643 370 décrit des dérivés de formule générale suivante :

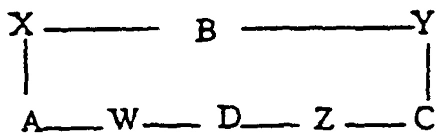

dans laquelle A, B, C et D peuvent représenter $-(CH_2)x-$, x étant compris entre 1 et 4 et W, X, Y et Z peuvent représenter $= N-(CH_2)y-COR$, y étant compris entre 1 et 4 et R représentant un groupe OH, $NH_2$ ou OR'. Ces dérivés peuvent être utilisés comme complexants d'éléments métalliques et sous forme complexée comme pièges à oxygène.

Toutefois, ces dérivés macrocycliques sont généralement très solubles dans l'eau. De ce fait, l'utilisation, la récupération et la régénération de ces dérivés en solution ne sont pas très aisées. Pour ces raisons, plusieurs modes de fixation ont été développés pour greffer ces dérivés macrocycliques sur des supports organiques ou inorganiques non aquasolubles. Ainsi, le brevet US-4 943 375 divulgue un macrocycle greffé sur de la silice, utilisable dans une colonne de séparation pour piéger un ion donné présent dans une solution de plusieurs ions.

La demande de brevet FR-2 613 718 décrit des tétramines cycliques greffées sur un polymère et susceptibles d'être utilisées pour l'extraction sélective et/ou le dosage des ions des métaux de transition et des métaux lourds. Toutefois, ces macrocycles greffés présentent l'inconvénient de ne pas être sélectifs d'un type particulier de métaux.

Dans le domaine du nucléaire, la demande de brevet EP-0 347 315 décrit un procédé pour séparer, au moyen d'éthers-couronnes, l'uranium et le plutonium présents dans un milieu aqueux provenant du retraitement des combustibles nucléaires irradiés. L'éther-couronne peut être le DCH 18C6, le DCH 24C8 ou le DB 18C6.

Enfin, le document WO-A-96 11056 concerne des polyazacycloalcanes substitués greffés sur un support, tel que de la silice et leur utilisation pour l'élimination de cations métalliques d'un liquide, en particulier des cations de métaux de transition, de métaux lourds, de métaux du groupe IIIa, des lanthanides ou des actinides.

Toutefois, la décontamination obtenue par le procédé de ce document, mettant en oeuvre de tels agents complexants, est encore insuffisante et ne satisfait pas aux normes mentionnées plus haut, et ne permet pas, en particulier, la suppression de la microfiltration ultime.

Il ressort de ce qui précède qu'il existe un besoin non satisfait pour un procédé et une installation, mettant en jeu des agents complexants, peu coûteux et efficace, qui permettent notamment le traitement des évaporats des tours d'évaporation industrielle, afin d'éliminer totalement les dernières traces en éléments émetteurs $\alpha$ et/ou qui assure le traitement des effluents en amont de la tour d'évaporation industrielle, afin de pouvoir remplacer cette tour tout en obtenant des effluents présentant les activités conformes aux normes de rejet indiqués plus haut.

Il existe encore un besoin pour un procédé qui réponde intégralement à ces exigences, en terme de décontamination, en un nombre limité d'étapes, sans impliquer de traitement ultime, par exemple, par microfiltration.

Le but de la présente invention est de fournir un procédé et une installation d'élimination des cations métalliques d'un fluide, plus précisément, un procédé de décontamination qui satisfait aux besoins indiqués ci-dessus.

Le but de la présente invention est, en outre, de fournir un procédé et un dispositif d'élimination des cations métalliques d'un fluide qui ne présente pas les inconvénients, limitations, défauts et désavantages des procédés et dispositifs de l'art antérieur et qui résolve les problèmes de l'art antérieur.

Ce but et d'autres encore sont atteints, conformément à la présente invention par un procédé d'élimination des cations métalliques contenus dans un liquide, dans lequel ledit liquide est mis en contact, à une température supérieure ou égale à 60°C, avec une résine échangeuse d'ions chélatante constituée d'un polyazocycloalcane greffé sur un support solide, ladite résine ayant été conditionnée préalablement à ladite mise en contact, à un pH de 4 à 6.

Selon l'invention, il a été constaté, de manière surprenante, que le fait d'opérer la mise en contact dans la

plage spécifique de températures, indiquée plus haut, et, en outre, de réaliser ladite mise en contact après avoir préalablement conditionné ladite résine à un pH spécifique permettait d'obtenir des capacités de fixation et une sélectivité vis-à-vis des actinides considérablement améliorées.

Parmi les nombreux paramètres régissant le processus de fixation des cations et influençant la capacité des résines, il ne découlait pas, de manière évidente, que c'était précisément la température de mise en contact, ainsi que le pH de conditionnement qui avaient une influence décisive sur leur capacité.

Cette constatation va à l'encontre de ce qui est couramment admis dans ce domaine de la technique, où il est connu qu'un tel conditionnement n'a que peu ou pas d'effet sur les gels de silice classique, ou les résines de type AMBERLITE®.

En outre, il était encore moins prévisible que le fait de se placer dans des plages spécifiques de ces deux paramètres spécifiques amènerait une amélioration surprenante de la capacité des résines. Cette capacité étant, en outre, combinée avec une très grande sélectivité vis-à-vis notamment des actinides.

Autrement dit, l'invention provient d'une sélection de deux paramètres parmi une infinité de paramètres, puis de la sélection de plages étroites de valeurs de ces deux paramètres et enfin de la combinaison de ces plages spécifiques de ces paramètres spécifiques.

Il est à noter que ce pH de conditionnement ne doit pas être confondu avec le pH, auquel est effectué la mise en contact, le procédé selon l'invention permet, en effet, de traiter des liquides dans une large gamme de pH, aussi bien acides ou très acides que basiques ou très basiques, indépendants de la plage de pH spécifique à laquelle a eu lieu le conditionnement. Autrement dit, même si le conditionnement est réalisé dans la plage de pH ci-dessus, un tel conditionnement ne limite pas le traitement à des liquides de pH spécifiques, on pourra, par exemple, par le procédé de l'invention, traiter tous les types d'effluents ayant un pH de 5 à 9, tels que les effluents à pH 7 en provenance de la tour d'évaporation.

De préférence, selon l'invention, la mise en contact est réalisée à une température allant de 60°C jusqu'à une température inférieure à la température d'ébullition du liquide à la pression régnant lors de la mise en contact, de préférence encore la mise en contact est réalisée à une température de 60 à 80°C et le pH de conditionnement de la résine est de 4 à 5, on obtient pour ces plages les meilleures capacité et sélectivité.

Le conditionnement (ou reconditionnement) de la résine est généralement réalisé en mettant en contact ladite résine avec une solution tampon, par exemple, une solution tampon aqueuse dont le pH se situe dans la plage citée ci-dessus, par exemple 4,7. A titre d'exemple de solution tampon, on peut citer un tampon type acide acétique - acétate de sodium ; cette mise en contact avec la solution tampon peut être éventuellement précédée et/ou suivie d'un rinçage de la résine avec le solvant majoritaire du liquide à traiter, par exemple avec de l'eau distillée.

Avantageusement, selon l'invention, le procédé est réalisé en continu, ladite résine étant placée dans au moins une colonne traversée par un courant du liquide à traiter.

Le procédé selon l'invention peut mettre en oeuvre de 1 à plusieurs, par exemple, 5 ou 10 colonnes de résine.

La mise en oeuvre des résines dans des colonnes rend le procédé selon l'invention aisé à mettre en oeuvre, efficace et peu coûteux.

Le conditionnement de la résine se fait alors simplement en faisant traverser la colonne par la solution tampon dans le sens de circulation du liquide à traiter (en général de bas en haut).

Le procédé selon l'invention comprend, en outre et de préférence, une étape de régénération de ladite résine lorsque celle-ci est saturée par les métaux fixés, afin de récupérer ces derniers.

De préférence, ladite régénération est réalisée en faisant traverser la ou les colonnes dans le sens inverse (en général de haut en bas) du sens de circulation (en général de bas en haut) du liquide à traiter par une solution de régénération.

De préférence, cette solution de régénération est choisie parmi les solutions acides, ayant pH de 1 à 3, par exemple, un pH voisin de 2, par exemple, les solutions d'acide nitrique, ayant, par exemple, une concentration de 1 à 3 mol./l.

Ladite solution de régénération contenant les métaux initialement fixés sur la résine peut être ensuite traitée, à l'issue de l'étape de régénération, pour récupérer les métaux, qui peuvent avoir une forte valeur ajoutée.

Ce traitement de la solution de régénération peut, par exemple, être celui décrit précédemment pour les effluents dits de forte activité.

La capacité de régénération des résines mentionnées ci-dessus, avait certes déjà été démontrée en mode statique, il est toutefois surprenant qu'une capacité de régénération importante puisse être également obtenue en mode dynamique. Cette capacité de régénération permet de mettre en oeuvre les résines dans un procédé industriel de décontamination, dans lequel il est nécessaire de pouvoir récupérer les métaux fixés sur la résine, afin de réutiliser le matériau plusieurs fois de suite.

Du fait que les résines, mises en oeuvre dans le procédé selon l'invention, sont facilement régénérées, le reconditionnement d'une quantité importante de déchets est toutefois évité.

Selon l'invention, et de préférence, le procédé d'élimination comprend une étape préalable de traitement du

liquide par mise en contact avec un échangeur d'ions connu choisi parmi les résines chélatantes du commerce telles que les résines de type polyacrylate, comme les résines connus sous le nom d'AMBERLITE®, par exemple, ou un adsorbant organique ou minéral connu, par exemple la silice, de préférence, cet adsorbant est choisi parmi les gels de silice, tels que le gel KIESELGEL® (MERCK®).

Un tel traitement est sensiblement analogue au traitement décrit dans le document FR-A-2 725 552 et les absorbants utilisés sont généralement analogues à ceux décrits dans ce document.

Un tel traitement permet d'accroître l'efficacité de la séparation vis-à-vis de certains métaux, tels que les métaux alcalino-terreux et les métaux de transition. Il permet une épuration partielle du liquide et une préfiltration du liquide et une saturation moins rapide de la résine polyazacycloalcane fixée sur un support. Ce traitement préalable est, de préférence, également réalisé en continu, ledit échangeur d'ions ou ledit adsorbant étant placé dans au moins une colonne traversée par un courant de liquide à traiter, et positionnée(s) en amont de ladite colonne remplie de résine.

De la même manière que la résine, cet échangeur d'ions ou cet adsorbant peut être, en outre, également régénéré lorsqu'il est saturé par les métaux fixés. De préférence, cette régénération a lieu dans les mêmes conditions que la régénération de la résine et simultanément à celle-ci et avec la même solution de régénération.

Lesdits cations de métaux à éliminer contenus dans le fluide sont de préférence des cations de métaux choisis parmi les métaux de transition, les métaux lourds, les métaux du groupe IIIA du tableau périodique, les lanthanides, les actinides, les métaux alcalino-terreux. Précisément dans la configuration à (au moins) deux colonnes, les métaux lourds et les lanthanides et actinides sont fixés sélectivement par la deuxième colonne, et les alcalins et alcalino-terreux par la première colonne, ce qui préserve la deuxième colonne de résine.

En particulier, ces cations sont choisis parmi les cations de U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba et Ra.

Le liquide traité par le procédé de l'invention peut être quelconque, mais il s'agit, de préférence, d'un liquide aqueux. Ce liquide peut être un effluent industriel, urbain, ou autre, il s'agit de préférence d'un effluent radioactif, par exemple, d'un effluent contaminé $\alpha$, de préférence, de faible activité, dans lequel lesdits cations sont des cations de radioéléments.

Cet effluent, de préférence, aqueux peut être issu d'une usine de retraitement de déchets nucléaires, d'un laboratoire nucléaire ou de toute autre installation, dans laquelle sont mises en oeuvre des substances radioactives, de préférence, cet effluent est l'effluent aqueux de faible activité issu de l'évaporateur industriel de l'installation de traitement des effluents d'une installation nucléaire.

Le procédé selon l'invention peut, pour le traitement d'effluents de faible activité, remplacer l'étape existante faisant appel à un évaporateur industriel et à un traitement ultime par microfiltration car le procédé selon l'invention permet d'épurer directement tous les effluents de faible activité, sans autre traitement ultérieur, et d'atteindre une activité nulle. Ou bien le procédé selon l'invention peut intervenir, en aval de l'étape d'évaporation mettant en jeu un évaporateur industriel pour réaliser une décontamination ultime en une seule étape, et remplacer l'étape de microfiltration en assurant l'élimination des métaux présents dans la fraction soluble des effluents.

Ledit liquide peut être également un fluide biologique, tel que du sang, auquel cas, les cations éliminés seront, par exemple, le cuivre ou l'aluminium.

Il est à noter que la nature de la résine mise en oeuvre peut être adaptée en fonction du ou des cations que l'on souhaite retenir et de l'effluent.

Les résines échangeuses d'ions chélatantes utilisées dans le procédé de l'invention et qui sont constituées d'un polyazacycloalcane greffé sur un support sont décrites pour la plupart dans le document WO-A-96 11056 et répondent à l'une des trois formules (I), (II) et (III) ci-dessous :

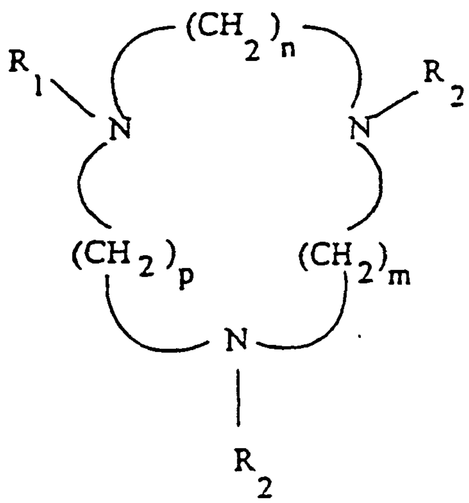

(I)

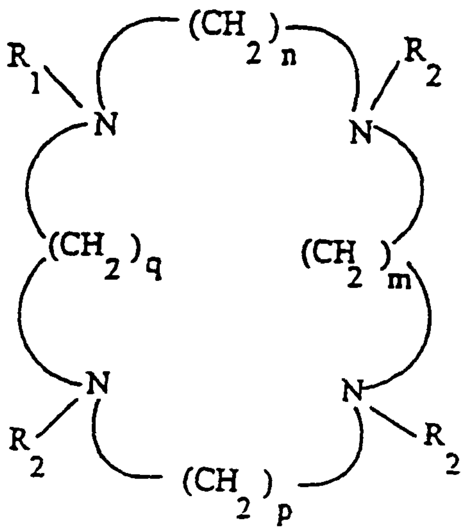

(II)

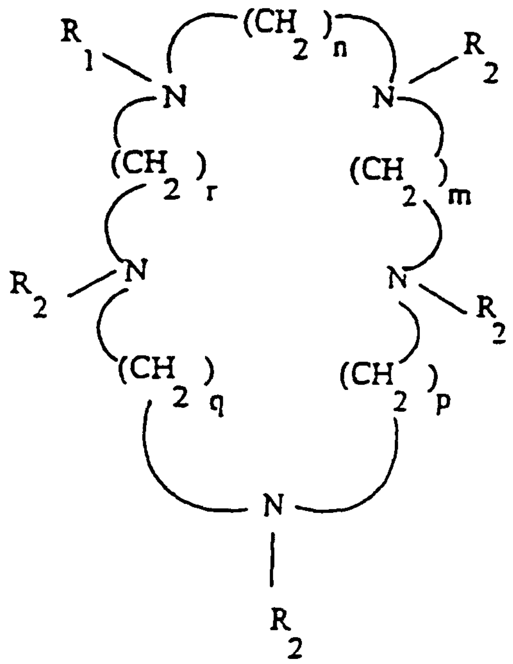

(III)

dans lesquelles n, m, p, q, r qui peuvent être identiques ou différents sont égaux à 2 ou 3, $R_1$ est un support solide, $R_2$ représente l'atome d'hydrogène ou le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle, ou $R_2$ représente le groupe -$(CH_2)$-$R_5$, $R_5$ représentant COOH ou $PO_3R_6$, $R_6$ représentant un groupe alkyle ou l'hydrogène.

Les gels de silice S, tels qu'utilisés dans l'invention (et qui peuvent aussi être utilisés dans le traitement préalable), sont définis, par exemple, dans KIRK-OTHMER ; Encyclopedia of Chemical Technology ; 3ème ed., vol. 20, p. 773-775.

Le support solide peut être un polymère organique, réticulé ou non et en particulier un reste d'un polymère organique réticulé ou non, à terminaison halogénure d'alkyle ou chlorure d'alkyle, tel qu'un reste d'un polystyrène chlorométhylé de formule :

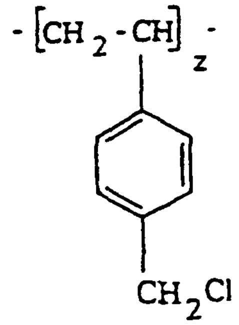

ou être un dérivé de la silice répondant à la formule :

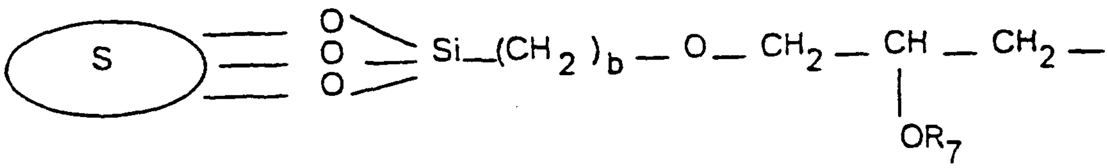

ou à la formule :

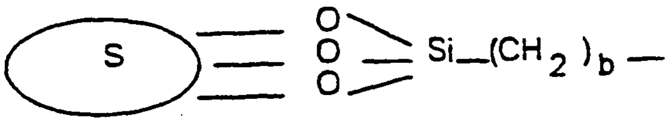

S représentant un gel de silice, b étant compris entre 1 et 4 et de préférence égal à 3 et $R_7$ étant un groupe alkyle ou un atome d'hydrogène.

On entend par reste d'un polymère organique réticulé ou non, à terminaison halogénure d'alkyle, un polymère dont le ou les halogènes ont été totalement ou partiellement substitués.

De préférence, la granulométrie du polystyrène chloro-méthylé et celle du support solide dérivé de la silice sont comprises entre 20 et 400 mesh, ou mieux entre 20 et 70 mesh. Il s'agit de la granulométrie du polystyrène chloro-méthylé et non de la granulométrie du reste qui peut être différente.

De préférence, selon l'invention, tous les atomes d'azote des macrocycles sont substitués par des groupes esters identiques : acétates, propionate, etc.

Lorsque tous les atomes d'azote de ces différents macrocycles sont substitués par les mêmes groupes esters, tels que acétate, propionate, les macrocycles présentent de remarquables propriétés de complexants des métaux des séries des lanthanides et actinides et notamment de l'europium et du gadolinium. Une analyse aux rayons X montre que la coordination de l'atome métallique avec le macrocycle est réalisée par les atomes d'oxygène des groupements carboxylate alors que les macrocycles proches décrits par exemple dans l'article de SPIRLET et al., Inorg. Chem., 1984, 359 -

363 ou dans l'article de DUBOST et al., C. R. Acad. Sci. Paris Ser. 2, 1991, 312, 349 - 354, l'atome métallique est coordonné à la fois aux atomes d'azote et d'oxygène. Ce résultat est imputable à la nature des groupes portés sur les atomes d'azote des macrocycles. De préférence, les macrocycles ou tous les substituants de l'azote sont des groupes esters, tels que propionate, acétate sont greffés sur un gel de silice.

De même, la nature du support peut être adaptée en fonction de l'effluent traité : ainsi, lorsque le support solide est un gel de silice, le produit obtenu est d'un coût réduit, de manière surprenante, facilement régénérable par simple traitement à l'acide, même en mode dynamique, stable dans la plupart des solvants organiques et inertes vis-à-vis de nombreux produits chimiques.

En outre, ce produit peut être utilisé sous pression, en milieu comburant ou oxydant.

Lorsque le support solide est du type résine de MERRIFIELD (marque déposée), commercialisée par la Société ALDRICH, le produit obtenu est physiologiquement inerte et peut être utilisé comme complexant sélectif d'éléments sanguins, par exemple, pour l'élimination du cation $Cu^{2+}$ dans un traitement de dialyse.

Dans la suite de la description, les noms des polyazacycloalcanes selon l'invention sont présentés sous une forme abrégée à des fins de simplification. Plus précisément, les polyazacycloalcanes à quatre atomes d'azote sont référencés sous la forme "R1, une suite de chiffres, R2" et répondent à la formule générale :

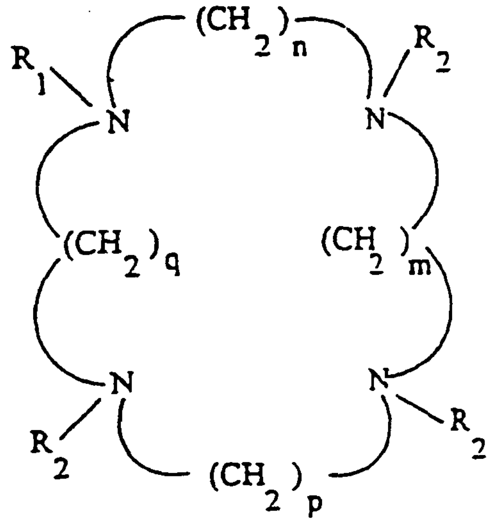

(II)

$R_1$ représentant le support Si, Si hydroxy ou Me, avec « Si » signifiant :

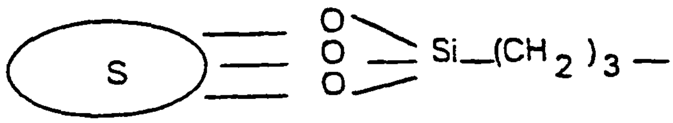

S = gel de silice
« Si hydroxy » signifiant :

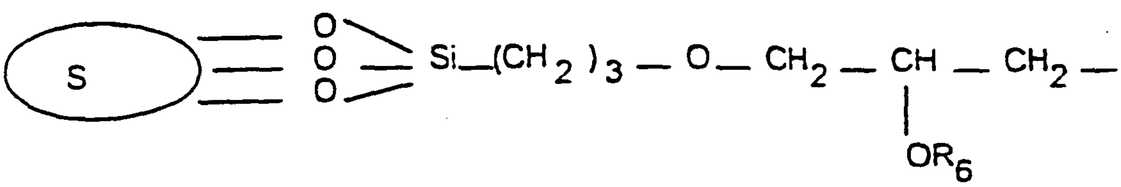

S = gel de silice
et « Me » signifiant résine de Merrifield de formule :

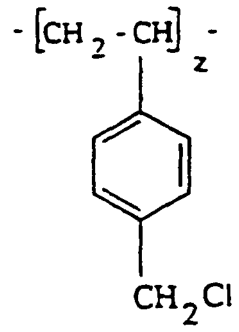

$R_2$ représentant TrP, TrA ou TrMP
avec « Trp » signifiant : $(CH_2)_2$-COOH
« TrA » signifiant : $CH_2$-COOH
et « TrMP » signifiant : $CH_2$-$PO_3H$.

Lorsque aucune indication n'est précisée pour $R_2$, cela signifie que $R_2$ = H.

Lorsque la suite de chiffres est 2222 ou 3333, cela signifie que n, m, p et q sont tous égaux respectivement à 2 ou à 3. Lorsque la suite de chiffre est 2323, cela signifie que n et p sont égaux à 2 et m et q sont égaux à 3 ou inversement que n et p sont égaux à 3 et m et q sont égaux à 2.

Les polyazacycloalcanes à 3 ou à 5 atomes d'azote sont référencés de façon similaire. Ainsi, la suite de chiffres 232 signifie que parmi n, m et p, deux de ces lettres représentent 2 et l'autre représente 3.

Ainsi, les résines préférées utilisées dans le procédé de l'invention sont les résines suivantes :

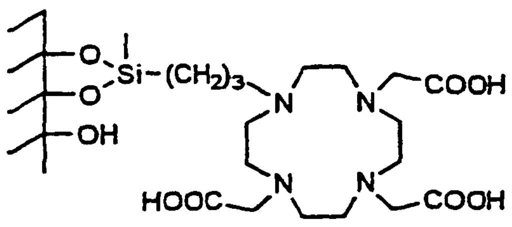

**Si2222trA**

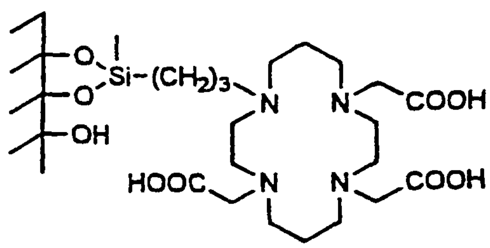

**Si2323trA**

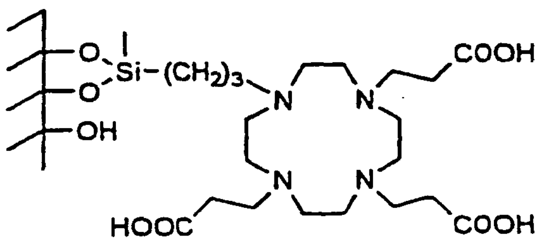

Si2222trPr

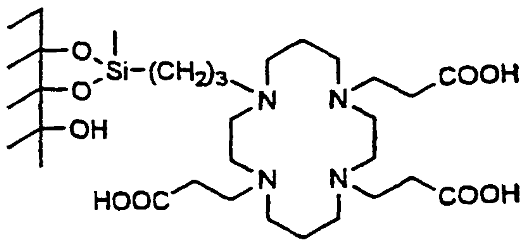

Si2323trPr

La Si2323trPr est la résine préférée.

Les résines mises en oeuvre dans le procédé selon l'invention peuvent être préparées par tout procédé adéquat.

Ainsi, les résines mises en oeuvre dans le procédé selon l'invention peuvent être préparées par le procédé décrit dans le document WO-A-96 11056, auquel on fait ici intégralement et explicitement référence et dont le contenu est intégralement inclus dans la présente description.

Le procédé décrit dans ce document consiste à faire réagir la silice avec un bras espaceur, puis, par exemple, avec un polyazacycloalcane, tel qu'un tétraazamacrocycle, et à réaliser ensuite la substitution des fonctions amines libres du macrocycle (polyazacycloalcane) par des groupes comportant notamment une fonction acide carboxylique.

La quantité de macrocycle greffé, suivant ce schéma de synthèse, est généralement d'environ 0,35 à 0,40 mmol.g de matériau. Ce premier procédé que nous appellerons pour la suite « voie 1 » a montré, lors de sa mise en oeuvre, que les étapes de la synthèse pouvaient être incomplètes.

En d'autres termes, cette voie de synthèse 1 présente deux inconvénients majeurs : seulement 30 à 50 % des bras espaceurs greffés dans la première étape réagissent avec le macrocycle. La quantité de macrocycles greffés s'en trouve ainsi considérablement réduite et la présence résiduelle des fonctions n'ayant pas réagi peut s'avérer préjudiciable lors de la mise en oeuvre d'un procédé, tel que celui de la présente invention, utilisant les matériaux pour une application donnée.

La N-fonctionnalisation du macrocycle, par exemple, du tétraazamacrocycle greffé, dernière étape de la synthèse, n'est pas quantitative car seulement une à deux fonctions amine secondaire sur les trois disponibles réagissent avec le réactif.

En outre, il n'est pas exclu que certains macrocycles soient liés par deux atomes d'azote au gel de silice. Cette hétérogénéité nuit grandement à l'efficacité et à la sélectivité du gel de silice modifié.

C'est la raison pour laquelle il est proposé un autre procédé de greffage pour la préparation des résines mises en oeuvre dans le procédé de l'invention.

Ce procédé, dit procédé de la « voie 2 », diffère essentiellement du procédé de la « voie 1 » par le fait que l'on change l'ordre de chacune des étapes du greffage, en faisant, tout d'abord, réagir un macrocycle, polyazacycloalcane non substitué, tel que le cyclame ou le cyclène (et non la silice, comme dans le procédé de la « voie 1 ») avec un bras espaceur, puis en greffant ledit composé portant un bras espaceur sur la silice.

Eventuellement, et de préférence, ledit composé (polyazacycloalcane) portant un bras espaceur (composé A) est tout d'abord fonctionnalisé préalablement à son greffage sur la silice, c'est-à-dire que l'on synthétise un macrocycle (polyazacycloalcane), par exemple, tétrasubstitué préalablement au greffage de celui-ci sur la silice.

Un exemple du procédé de la « voie 2 » sans fonctionnalisation préalable du composé portant le bras espaceur est donné ci-dessous, le composé de départ étant le cyclame et le bras espaceur répondant à la formule :

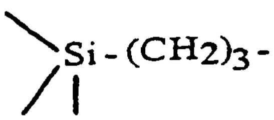

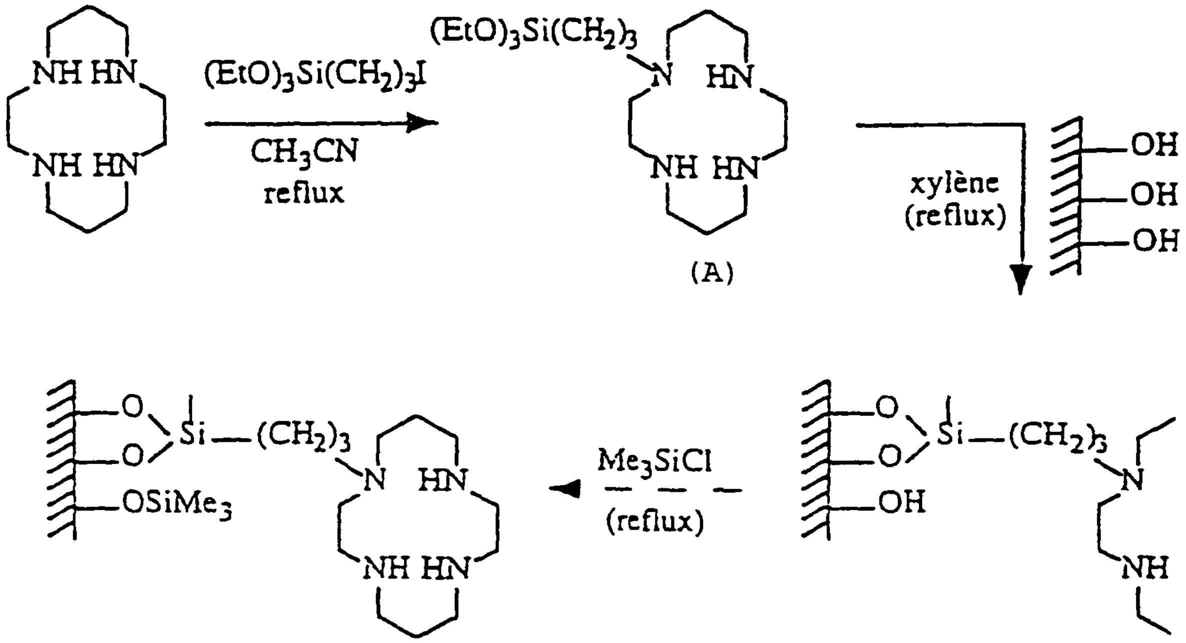


(A)

Dans ce schéma réactionnel, la dernière étape (flèche en pointillés) est facultative, elle permet de protéger les groupes silanols libres restant sur la silice.

L'iodopropyltriéthoxysilane est synthétisé simplement par action de NaI sur le chloropropyltriéthoxysilane commercial. L'iodopropyltriéthoxysilane en solution dans l'acétonitrile est alors ajouté goutte à goutte à une solution de cyclame dans l'acétonitrile au reflux en présence de $Na_2CO_3$. Le mélange réactionnel est maintenu au reflux pendant 24 h, le solvant est ensuite évaporé et du pentane est ajouté au résidu. Le cyclame en excès, insoluble, est filtré, le filtrat est concentré et le composé (A) est obtenu sans purification ultérieure avec un rendement de 50 %. Le greffage de (A) sur le gel de silice est réalisé au reflux du xylène pendant 4 jours. La quantité de macrocycles greffés est alors, par exemple, de 0,8 mmol.g de gel de silice modifié.

Le composé (A) peut être éventuellement fonctionnalisé, puis greffé ensuite suivant le schéma :

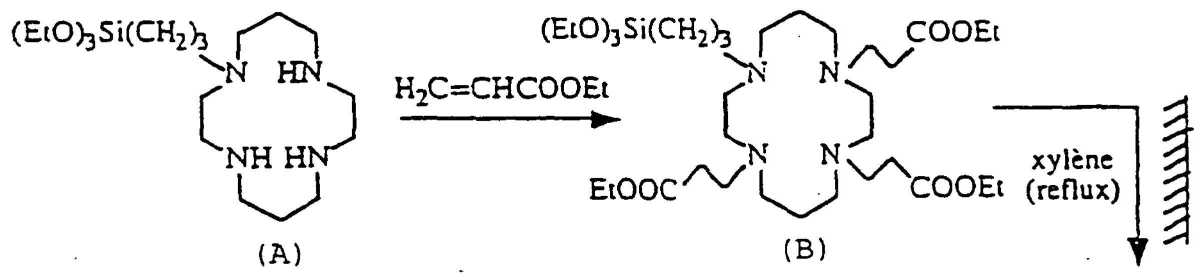


(A)

(B)

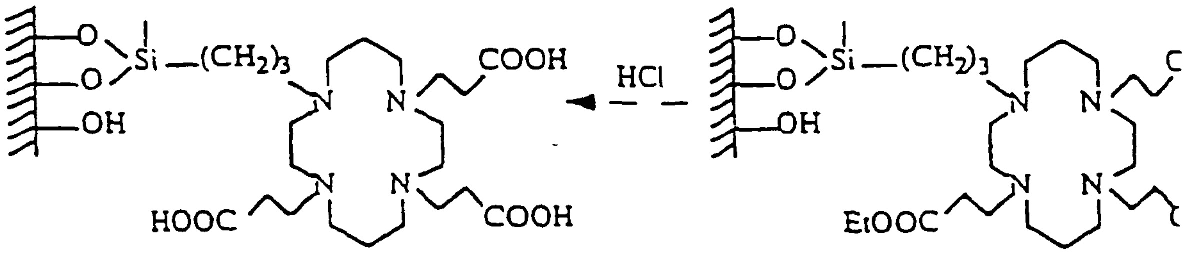


Le composé A est agité pendant 4 jours à température ambiante dans l'acrylate d'éthyle. Après évaporation de l'acrylate d'éthyle et plusieurs lavages au pentane, le produit B est obtenu quantitativement. Le greffage de B sur le gel de silice est ensuite réalisé comme décrit plus haut. Le composé final est, selon la nomenclature utilisée dans la présente demande, la résine « Si2323trPr ».

La dernière étape de réaction avec HCl est toutefois facultative, le composé précédant à trois fonctions esters étant aussi susceptible d'être mis en oeuvre dans le procédé selon l'invention.

Il est bien évident que le procédé décrit ci-dessus peut être appliqué à tout macrocycle de départ non substitué connu, à tout bras espaceur, à tout support comportant des sites actifs, silanols ou autre, et que la réaction de fonctionnalisation peut être toute réaction connue de l'homme du métier.

Ainsi, différents bras espaceurs (contenant des motifs aromatiques, des fonctions ester ou amide) peuvent être utilisés, de même, le réactif électrophile utilisé lors de la N-fonctionnalisation peut aussi varier, permettant l'accès à un large éventail de gels de silice présentant une efficacité et une sélectivité optimales.

Si on compare ce procédé à celui procédant par greffage du groupe espaceur sur le gel de silice, puis par fixation sur ce bras du ligand désiré, ce nouveau procédé permet généralement de doubler la quantité de tétraazamacrocycles greffés à la surface du gel de silice. On augmente ainsi, de manière significative, le nombre de « sites actifs » par unité de surface et une amélioration considérable de l'efficacité du matériau en découle. Le deuxième avantage, plus important encore, est de pouvoir contrôler totalement la nature du ligand fixé, puisqu'il est synthétisé, isolé et caractérisé avant greffage.

Ce nouveau procédé de synthèse des ligands porteurs du bras espaceur ne nécessite pas de conditions expérimentales particulières et conduit avec des rendements convenables aux composés attendus sans purification ultérieure. En outre, cette synthèse est réalisée en une seule étape et non deux comme dans le procédé faisant intervenir l'hydrosilylation de l'alcène terminal. Enfin, la N-substitution de ces ligands est quantitative et permet le greffage de macrocycles totalement N-substitués.

En d'autres termes, le procédé de la « voie 2 » possède l'avantage de pouvoir préparer et caractériser le macrocycle tétrasubstitué par les techniques classiques de la chimie organique. Ce mode de greffage permet, d'une part, d'être certain que le macrocycle greffé est bien porteur, par exemple, de trois bras « acide carboxylique » (ces fonctions ont un rôle primordial dans la complexation des actinides) et, d'autre part, au moins de doubler la quantité de macrocycle greffée par unité de masse (voir tableau I).

Ainsi, les différentes quantités de macrocycles greffées pour diverses résines ont été déterminées par analyse élémentaire. Les résultats sont regroupés dans le tableau I, qui fait clairement apparaître que les résines préparées par le procédé de la « voie 2 » ont une quantité de macrocycle greffée nettement supérieure à celle des résines préparées par le procédé de la « voie 1 ».

Tableau I

| Quantités de macrocycles greffées pour les différents gels de silice modifiés | |
|---|---|
| Résine | Quantité de macrocycles Greffée ($mmol.g^{-1}$) |
| Si2222trA | 0,24 |
| Si2323trA | 0,26 |
| Si2222trPr | 0,28 |
| Si2323trPr (« voie 1 ») | 0,32 |
| Si2323trPr (« voie 2 ») | 0,61 |

De manière générale, si la quantité de polyazacycloalcane greffé par unité de masse de support, grâce aux procédés des « voies 1 et 2 » est généralement de 0,1 à plusieurs $mmol.g^{-1}$, de préférence cette quantité doit être la plus élevée possible.

La quantité de polyazacycloalcane greffée par unité de masse obtenue par le procédé de la « voie 2 » est en outre, comme indiquée plus haut, nettement supérieure à celle de la « voie 1 », elle est donc généralement supérieure à 0,4 $mmol.g^{-1}$, de préférence supérieure ou égale à 0,6 $mmol.g^{-1}$, de préférence encore supérieure ou égale à 0,8 $mmol.g^{-1}$.

Le procédé de la « voie 2 » est décrit dans le brevet français FR-A-2 774 092 (n° de demande 98 00784), auquel il est fait ici intégralement et explicitement référence et dont le contenu est intégralement inclus dans la présente description.

L'invention a également trait à l'installation pour la mise en oeuvre du procédé selon l'invention.

Une telle installation pour l'élimination des cations métalliques contenus dans un liquide comprend essentiellement au moins un récipient, tel qu'une colonne remplie ou garnie d'une résine échangeuse d'ions chélatante constituée d'un polyazacycloalcane fixé sur un support, des moyens pour faire traverser ladite colonne par un courant de liquide à traiter, des moyens pour conditionner ladite résine à un pH de 4 à 6 et des moyens pour chauffer ladite résine à une température supérieure ou égale à 60°C.

L'installation peut comprendre, en outre, des moyens pour régénérer ladite résine.

Avantageusement, l'installation selon l'invention comprend, en outre, un récipient, tel qu'une colonne remplie d'un échangeur d'ions ou d'un adsorbant organique ou minéral différent de ladite résine polyazacycloalcane greffée sur un support, placée en amont (par rapport au sens de circulation du courant de liquide à traiter) de ladite colonne remplie de résine.

L'installation, selon l'invention, comprendra aussi, en outre, de préférence, des moyens de régénération dudit échangeur d'ions ou adsorbant.

D'autres caractéristiques et avantages de l'invention apparaîtront mieux à la lecture de la description et des exemples suivants, donnés à titre illustratif et non limitatif.

Cette description est faite en référence aux dessins joints, dans lesquels :

- la figure 1 est une vue schématique en coupe verticale d'une installation pour la mise en oeuvre du procédé selon l'invention, convenant, plus particulièrement, à un traitement des effluents en aval de l'évaporateur industriel, comprenant deux colonnes respectivement remplies de silice et de résine polyazacycloalcane fixé sur silice ;
- la figure 2 est une vue schématique en coupe verticale d'une installation pour la mise en oeuvre du procédé selon l'invention, au stade du laboratoire, convenant plus particulièrement à un traitement des effluents en amont de l'évaporateur industriel ;
- la figure 3 est un graphique qui montre l'effet de la température sur l'extraction de l'uranimum (VI) à un pH de 5 et pour une durée de 18 h.

En abscisse est portée la température T(°C) et en ordonnée est porté le coefficient de partage statique $Kd_s$ (ml/g), la courbe en traits pointillés est relative à un gel de silice témoin et la courbe en trait plein est relative à la résine Si2323trPr (« voie 1 ») ;

- la figure 4 est une vue schématique en coupe verticale du dispositif utilisé pour les essais en mode dynamique ;
- la figure 5 est un graphique qui donne le profil d'élution « type » de l'uranium à travers une colonne remplie de gel de silice modifié. En ordonnée, est portée la concentration C en uranium en sortie de colonne et en abscisse est porté le volume de solution élué V ;
- la figure 6 est un graphique qui donne le coefficient de partage dynamique $Kd_d$(l) pour la résine Si2323trPr (« voie 1 ») (I) et pour le gel de silice témoin en fonction du pH (T = 25°C, incertitude $\pm$ 10 %) ;
- la figure 7 est un graphique qui donne le coefficient de partage dynamique $Kd_d$(l) pour les résines Si2323trPr (« voie 1 ») (I) et Si2323trPr (« voie 2 ») (II) à pH 4, et pour le gel de silice témoin à pH = 9, en fonction de la température T(°C) (incertitude $\pm$ 10 %) ;
- la figure 8 est un graphique qui représente le profil d'élution de l'uranium (VI) à partir d'une colonne remplie de Si2323trPr (« voie 2 »), à l'aide d'une solution d'acide nitrique 2N et à température ambiante.

En ordonnée, est portée la concentration en uranium, C en g/l, et en abscisse est porté le volume de $HNO_3$ (V) éluée en ml ;

- la figure 9 est un graphique qui illustre les quantités d'uranium fixées (bandes rayées) et relarguées (bandes blanches) en mmol.g pour 5 expériences réalisées avec le matériau Si2323trPr (« voie 2 ») (incertitudes $\pm$ 10 %).

La figure 1 est un exemple de réalisation d'une installation pour la mise en oeuvre du procédé selon l'invention convenant, plus particulièrement, à un traitement des effluents en aval de l'évaporateur industriel comprenant deux colonnes, la première remplie de silice et la seconde remplie de résine, polyazacycloalcane fixé sur silice.
Cet exemple d'installation selon l'invention comporte schématiquement les éléments suivants.

- Une cuve (1) de réception des effluents contaminés d'un volume, par exemple, de 1,5 $m^3$ munie de capteurs de niveaux haut et bas, d'un thermoplongeur (2), d'une sonde de température (3) et d'un système de brassage (non représenté). Avant réception, l'effluent est envoyé par une pompe (5) au travers d'un bol filtrant (6) muni de cartouches, par exemple de trois cartouches d'un diamètre de pore de 5 $\mu$m.
- Un circuit de décontamination composé d'une pompe doseuse (7), d'un premier manomètre (8), d'une première colonne remplie de silice (9) qui est munie de colliers chauffants avec un système de régulation de la température, d'un second manomètre (10), d'un réchauffeur (11), d'une seconde colonne remplie, par exemple, de résine Si2323trPr (12), d'une sonde de température (13) et d'un débitmètre (14). Chaque colonne contient de l'ordre de 12 litres de résine. L'ensemble de la tuyauterie est, de préférence, en inox.
- Une cuve de réception des effluents traités (15) munie de capteurs de niveaux haut et bas.
- Un circuit d'élution composé d'une pompe péristaltique (16), d'une tuyauterie en inox (17, 18) et de deux bidons (19, 20).

L'installation comprend, en outre, sur la canalisation reliant la cuve (1) à la colonne (9), un filtre (22), une électrovanne (23), et une pompe doseuse (24). Des vannes manuelles (25) sont par ailleurs prévues aux entrées et sorties des deux colonnes (9) et (12). Un capteur de température (26) est placé sur la canalisation d'alimentation de la cuve de réception des effluents traités (15) et une pompe (27) peut prélever les effluents se trouvant dans cette cuve pour un rejet (28) après une analyse radiologique.
L'ensemble de l'installation est placé dans un bac de rétention muni de sondes d'inondation. Les systèmes de chauffage, les différentes sondes et les pompes sont asservis à un boîtier électrique.
Le fonctionnement de l'installation de la figure 1 peut être décrit de la manière suivante :
Préalablement, l'effluent à traiter, acheminé, par exemple, par camion citerne, est entraîné par la pompe (5) à travers le filtre à cartouches (6), afin d'éliminer les impuretés et particules solides (boue, algues, etc.). En effet, les procédés d'extraction sur phase solide sont, d'une manière générale, très sensibles à l'encrassement et doivent être protégés en amont par un système de filtration. L'effluent « propre » est ensuite admis dans la cuve de réception des effluents contaminés (1).
Le fonctionnement de l'installation peut se décomposer en deux phases :

1) <u>Fixation :</u> les effluents sont entraînés par la pompe doseuse (7) successivement à travers les deux colonnes (du bas vers le haut) (9) et (12), remplies respectivement de silice et de résine, par exemple, de résine Si2323trPr.
Selon l'invention, la température de l'effluent lors du passage sur la colonne de résine est, de préférence, de 60°C. Le chauffage de l'effluent est effectué simultanément à l'aide du thermoplongeur (2), des colliers chauffants et du réchauffeur (11). Le débit de l'effluent lors de cette phase de fixation est compris, par exemple, entre 30 et 60 l/h. L'effluent est ensuite récupéré dans la cuve de réception des effluents traités (15).
Si l'analyse radiologique (29) n'indique aucune trace de contamination, l'effluent est alors, par exemple, directement transféré vers l'évaporateur industriel (28) pour réaliser l'évaporation finale ou rejeté à l'environnement (28).
En cas de contamination, l'effluent est alors réinjecté en début de procédé dans la cuve de réception des effluents contaminés (1).
2) <u>Régénération</u> : une solution d'acide nitrique, par exemple (1N) (19) est entraînée par la pompe péristaltique (16), indépendamment à travers la colonne désirée, à contre-courant (du haut vers le bas). Bien entendu, en raison de la capacité importante des résines et de la très faible activité des effluents à traiter, cette opération est très peu fréquente.

Les résines, en fin de régénération, nécessitent un reconditionnement avant d'entamer un nouveau cycle. Le reconditionnement s'effectue par injection d'eau, d'une solution tampon à pH 4,7, puis d'un dernier rinçage à l'eau, en utilisant le même circuit.
Dans les exemples qui suivent, on met en évidence le rôle de la température et du pH de conditionnement, ainsi que de la nature du ligand sur les capacités des résines de polyazacyclohexane greffés sur silice.
On effectue tout d'abord une étude en mode statique, puis une étude en mode dynamique.

<u>Exemple 1</u>

Dans cet exemple, on étudie en mode statique, la capacité des résines utilisées dans le procédé de l'invention

pour piéger l'uranium. Cette capacité et déterminée par des expériences en « batch » avec mise en contact du séquestrant en présence d'un excès de sel dans des conditions déterminées, notamment de pH et de température.

Le mode opératoire des essais en mode statique est le suivant.

Une masse connue (environ 100 mg) de résine séchée sous vide est placée dans une fiole contenant 10 ml d'une solution à 1 $g.l^{-1}$ de nitrate d'uranyle à pH 5. L'ensemble est agité à température constante pendant 18 h. Ensuite, la résine est filtrée et rinçée avec de l'eau distillée. Le filtrat et les eaux de rinçage sont collectés et ajustés à 50 ml dans une fiole jaugée. La concentration en U(VI) est déterminée par ICP-AES. La quantité d'U(VI) fixée est calculée par rapport à la concentration en U(VI) avant et après l'extraction.

Pour chaque silice modifiée, deux expériences sont réalisées.

La capacité totale est calculée en considérant la quantité d'uranium extraite, par rapport à la masse de résine et au volume de la solution par l'intermédiaire du coefficient de partage statique $Kd_s$.

Pour chaque expérience réalisée, le coefficient de partage statique, $Kd_s$, est calculé selon la formule suivante :

$$Kd_s = \frac{\text{[quantité d'uranium piégée]/[masse de résine sèche]}}{\text{[quantité d'uranium restante en solution]/[volume de la solutior}}$$

$$Kd_s = \frac{[C_O] - [C]}{[C]} \times \frac{V}{m}$$

| | |
|---|---|
| $[C_o]$ = | concentration de la solution avant extraction ($g.ml^{-1}$) |
| [C] = | concentration de la solution après extraction ($g.ml^{-1}$) |
| V = | volume de la solution (ml) |
| m = | masse de résine (g) |

Le coefficient de partage $Kd_s$ reflète directement la capacité du matériau à fixer le métal. Ce coefficient de partage peut à priori être infini, mais est souvent égal à quelques centaines, voire parfois même quelques milliers.

Exemple 1A

Dans cet exemple, on étudie l'effet de la température sur l'extraction de l'uranium VI. Le mode opératoire est celui décrit plus haut, mais, de plus, la solution est chauffée durant l'extraction.

On détermine ainsi les coefficients de partage statique obtenus pour un gel de silice de type KIESELGEL® (MERCK®), qui fait office de témoin et pour la résine Si2323trPr (préparée par le procédé de la « voie 1 »), en fonction de la température, le pH étant maintenu constant à une valeur de 5.

Les résultats obtenus sont regroupés sur la figure 3, où l'on a porté le coefficient de partage $Kd_s$ (ml/g) en fonction de T(°C). La courbe en trait plein est relative à la résine Si2323trPr (« voie 1 ») et la courbe en traits pointillés est relative au gel de silice.

Cette étude montre que pour le gel de silice, la température n'a pratiquement aucune influence sur l'adsorption de l'uranium, c'est-à-dire que la cinétique est rapide, alors que pour la silice modifiée Si2323trPr (obtenue par le procédé de la « voie 1 »), l'augmentation de la température provoque un accroissement considérable de l'efficacité de la résine, ce résultat traduit que la vitesse de la réaction de complexation est lente.

L'extraction de l'U(VI) à 80°C, avec cette résine, permet de retenir, en statique, près de 90 % d'U(VI) ($Kd_s$ = 784).

Exemple 1B

Dans cet exemple, on étudie l'influence de la nature du ligand de la résine sur l'extraction de l'uranium VI.

Les coefficients de partage statique de différents types de silices modifiées, synthétisées, ont été déterminés en suivant le mode opératoire décrit plus haut. Le pH étant maintenu égal à 5 et la température à 80°C. A titre de comparaison, on a déterminé, dans les mêmes conditions, les coefficients de partage statique d'un gel de silice et de la résine chélatante commerciale AMBERLITE® IRC718 (acide iminoacétique greffé sur polystyrène).

Les résultats sont regroupés dans le tableau II, ci-dessous :

Tableau II

| Coefficient de partage statique $Kd_s$, pour les différentes résines étudiées (pH 5 ; T = 80°C ; t = 18 h, incertitude = + 20 %) | |
|---|---|
| Résine | $Kd_s$ |
| AMBERLITE® IRC718 | 45 |
| Gel de silice | 290 |
| Si22220HtrA | 353 |
| Si2323OHtrA | 303 |
| Si2222OHtrPr | 852 |
| Si2323OHtrPr | 1 078 |
| Si2323trPr (« voie 1 ») | 784 |
| Si2323trPr (« voie 2 ») | 1 140 |

En raison de la quantité de macrocycles greffée élevée, la résine Si2323trPr, préparée selon le procédé de greffage, dit de la « voie 2 », possède le coefficient de partage le plus élevé.
La comparaison de ces résultats, avec ceux obtenus dans les mêmes conditions avec la résine chélatante commerciale AMBERLITE® IRC718, montre que ces nouvelles résines chélatantes sont de remarquables séquestrants de l'uranium (VI).

Exemple 2

On étudie, dans cet exemple, la capacité d'échange dynamique des résines.
En effet, la capacité d'échange « statique » des résines est un paramètre important, mais pour un procédé réalisé en mode dynamique sur une colonne, la capacité d'échange « dynamique » est le paramètre qui traduit réellement les propriétés séquestrantes des résines étudiées.
Les tests ont été réalisés en mettant en oeuvre le dispositif représenté sur la figure 4 qui est composé sommairement d'une colonne (41), d'un diamètre de 10 mm et d'une hauteur de 300 mm, munie d'une jaquette de thermostatisation permettant de réguler la température à l'aide d'un bain thermostaté (43), et d'une pompe péristaltique (42) pour obtenir le débit souhaité.
Environ 12 g de gel sont placés dans la colonne (41) après passage dans une solution d'eau distillée. Avant chaque essai, la résine est conditionnée à différents pH, en éluant 500 ml d'une solution tampon à travers la colonne, puis une solution d'eau distillée pour rincer la résine. Après ce traitement, la colonne est prête à l'utilisation.
Pour les tests de fixation, la solution à purifier (44) est éluée sur la colonne de bas en haut (flèche 46) à un débit de l'ordre de 100 $ml.h^{-1}$. Les échantillons à analyser sont collectés (45) tous les 100 ml et la concentration en U (VI) est déterminée par ICP-AES. La solution est éluée sur la colonne jusqu'à ce que la fuite observée corresponde à la concentration de la solution mère.
Les tests de régénération sont réalisés en éluant 100 ml d'une solution d'acide nitrique 2N au même débit, mais du haut vers le bas de la colonne (flèche 47), immédiatement après les tests de fixation.
Un rinçage de la colonne est ensuite réalisé à l'aide d'une solution d'eau distillée. Les échantillons à analyser sont collectés tous les 10 ml et la concentration en U(VI) est déterminée par ICP-AES.
Pour chaque colonne de silice modifiée, deux expériences ont été réalisées.
La capacité d'échange « dynamique » dépend d'un nombre important de paramètres et, en particulier, de la concentration de la solution à extraire. Afin d'obtenir les courbes de saturation, qui donnent la variation de la concentration en uranium en sortie de colonne (C), en fonction du volume de solution éluée (V) (voir figure 5), une concentration en uranium, bien plus élevée que celles observées dans les effluents, a été choisie.
On considère généralement que le volume de saturation de la colonne est atteint ($V_{1/2}$), lorsque la concentration en sortie est égale à la moitié de la concentration de la solution mère ($C_o/2$).
La mesure de la capacité en mode dynamique des résines, selon ce procédé, a été réalisée en calculant pour chaque expérience le coefficient de partage dynamique $Kd_d$, selon la formule suivante :

$$Kd_d = \frac{[\text{quantité d'uranium piégée}]/[\text{masse de résine sèche}]}{[\text{quantité d'uranium restante en solution}]/[\text{volume de la solution}}$$

$$Kd_d = \frac{[C_o] - [C]}{[C]} \times \frac{V}{m}$$

$[C_o]$ = concentration de la solution avant extraction ($g.ml^{-1}$)
[C] = concentration de la solution après extraction ($g.ml^{-1}$)
V = volume de la solution (ml)
M = masse de résine (g)

Le $Kd_d$ est calculé d'après la courbe de saturation obtenue quand $C = C_o/2$ :

$$Kd_d = V_{1/2}/m.$$

Il convient de mentionner que la courbe de saturation permet également de calculer la masse d'uranium retenue, qui est approximativement égale à $V_{1/2} \times S_o$.

Pour ces expériences, on a choisi de tester les résines Si2323trPr synthétisées selon les voies 1 et 2. La silice a été systématiquement choisie comme matériau témoin.

Exemple 2A

Dans cet exemple, on étudie l'influence du pH de conditionnement des résines sur l'extraction de l'uranium (VI), à l'aide des résines mises en oeuvre dans le procédé de l'invention et à l'aide d'un gel de silice témoin. Le mode opératoire est celui indiqué ci-dessus.

L'extraction de l'uranium est étudiée spécifiquement sur la résine Si2323trPr (préparée par le procédé de la « voie 1 ») pour une gamme de pH des solutions tampons du conditionnement allant de 2 à 9 (2,5 ; 4 ; 5 ; 7 et 9), la température étant constante et égale à 25°C.

Les résultats sont regroupés dans le tableau III.

Tableau III

| Coefficient de partage dynamique pour la résine Si2323trPr, en fonction du pH (T = 25°C, incertitude = + 10 %) | | |
|---|---|---|
| | $Kd_d$ | |
| pH | Si2323trPr (« voie 1 ») | Gel de silice |
| 2,5 | 5 | 5 |
| 4 | 2, 6 | 156 |
| 5 | 3 | 112 |
| 7 | 3 | 67 |
| 9 | 6 | 3 |

Les résultats obtenus qui sont reportés sur la figure 6 permettent la détermination expérimentale du pH optimum qui est compris entre pH 4 et pH 5. Ce résultat est en bon accord avec l'étude thermodynamique de cette nouvelle classe de ligands.

Par ailleurs, il est surprenant de constater la très faible capacité de la silice en mode dynamique par rapport à ce qui était observé en mode statique. Le mode de piégeage de la silice s'effectuant essentiellement par simple adsorption physique, on peut supposer, qu'en mode dynamique, l'élution de la solution entraîne l'uranium adsorbé.

Exemple 2B

Selon l'invention, pour accélérer la vitesse de complexation avec les résines mises en oeuvre, il est nécessaire d'opérer à une température élevée durant le procédé.
Dans cet exemple, on étudie donc l'influence de la température sur le coefficient de partage dynamique, à la fois sur la silice (témoin), et sur les résines Si2323trPr (« voie 1 ») et Si2323trPr (« voie 2 »). Le mode opératoire est celui décrit plus haut, le pH de conditionnement étant maintenu constant et égal à 4 pour la résine Si2323Pr et à 9 pour la silice. Les résultats obtenus sont regroupés dans le tableau IV et reportés sur la figure 7.

Tableau IV

| Coefficient de partage dynamique pour la silice (pH 9) et Si2323trPr (pH 4) en fonction de la température (incertitudes = + 10 %) | | | |
|---|---|---|---|
| $Kd_d$(l) | | | |
| T(°C) | Gel de silice | Si2323trPr (« voie 1 ») | Si2323trPr (« voie 2 ») |
| 25 | 6 | 158 | 182 |
| 50 | 6 | 202 | 266 |
| 80 | 8 | 242 | 324 |

On note que le maintien de la colonne à 80°C permet d'augmenter considérablement et de manière surprenante l'efficacité des résines utilisées selon l'invention et que l'augmentation est comprise entre 50 % et 70 %, selon les cas.
Dans le meilleur des cas, c'est-à-dire pour l'utilisation de la résine Si2332trPr (« voie 2 »), le $Kd_d$ observé (324) correspond à la fixation de 0,33 mmol d'uranium par gramme de résine (79 mg d'uranium par gramme de résine).
Comme on l'a déjà évoqué précédemment, la simple utilisation de colonnes remplies de silice, quelles que soient les conditions d'utilisation, conduit à des résultats très médiocres.
Cette étude en mode dynamique montre clairement que des résultats incomparablement meilleurs en termes d'efficacité d'extraction, représentée par la capacité, sont obtenus dans les plages spécifiques de pH de conditionnement et de température, du procédé selon l'invention. Les essais démontrent que le procédé selon l'invention permet d'atteindre une décontamination des effluents contaminés $\alpha$, qui n'avait jamais été obtenue par les procédés de l'art antérieur.
Dans le tableau V, on indique la quantité d'U fixé (mmol.g), selon les conditions du procédé.

Tableau V

| Quantité d'U fixée (mol.g) | Conditions du procédé |
|---|---|
| 0,33 | Si2323 (« voie 2 »), conditionnement à pH 4, T = 80°C |
| 0,24 | Si2323trPr (« voie 1 »), conditionnement à pH 4, T = 80°C |
| 0,16 | Si2323trPr (« voie 1 »), conditionnement à pH 4 |
| 0,01 | Si2323trPr (« voie 1 »), sans conditionnement |

La meilleure capacité est obtenue pour l'utilisation de la résine Si2332trPr (« voie 2 »), à 80°C et après conditionnement à pH 4.

Exemple 3

Cet exemple concerne des essais de régénération en mode dynamique des résines mises en oeuvre dans le procédé selon l'invention.
Ces tests ont été réalisés, après avoir saturé par l'uranium, selon les conditions optimales d'utilisation, une colonne chargée de résine Si2323trPr (« voie 2 »). Après saturation, une solution d'acide nitrique 2 N est éluée au même débit, mais du haut vers le bas de la colonne, à température ambiante.
Les profils d'élution (concentration en uranium (VI) en fonction du volume de $HNO_3$ élué) obtenus pour chaque expérience, permettent de calculer la quantité d'uranium relarguée et donc le taux de régénération :

$$\text{Taux de régénération} = \frac{\text{quantité d'uranium rel arg uée}}{\text{quantité d'uranium fixée}} \times 100$$

A titre d'exemple, le profil d'élution type (figure 8) présente un pic d'élution très élevé observé vers le milieu du profil d'élution pour une concentration d'uranium atteignant 80 fois celle de la solution mère. Le taux de régénération calculé est proche de 100 % aux incertitudes près. On peut donc considérer que la récupération de l'uranium est quantitative.

Une étude réalisée sur plusieurs cycles extraction/régénération consécutifs (figure 9) montre que dans tous les cas le relarguage de l'uranium est total et la régénération du matériau totale.

Exemple 4

Dans cet exemple, on réalise le traitement d'effluents réels du centre du CEA de VALDUC par une installation pilote selon l'invention comprenant deux colonnes. Cette installation est sensiblement analogue à celle de la figure 1 et son fonctionnement est également tel que décrit ci-dessus. Cette installation pilote est utilisée pour réaliser la décontamination ultime, c'est-à-dire un traitement en aval de l'évaporateur industriel.

Nous précisons ci-après les caractéristiques de l'installation pilote et les conditions opératoires mises en oeuvre. Celles-ci ont sensiblement les conditions optimales d'utilisation des résines précédemment définies en mode dynamique.

L'installation comporte une première colonne remplie de silice (12 litres) et une seconde colonne remplie de résine Si2323trPr.

La cuve de réception des effluents contaminés a un volume de 1,5 $m^3$, l'effluent avant réception passe au travers d'un bol filtrant muni de trois cartouches (diamètre de filtration 5 $\mu$m).

La cuve de réception des effluents traités a également un volume de 1,5 $m^3$.

L'ensemble de l'installation est placé dans un bac de rétention de 3 $m^3$.

La température de l'effluent, lors du passage sur la colonne de résine Si2323trPr, est de 60°C.

Le débit de l'effluent, lors de la phase de fixation, est de 30 à 60 1/h. La régénération est réalisée avec une solution d'acide nitrique 1 N, à l'issue de laquelle les résines sont reconditionnées par une solution tampon à pH 4,7.

Les résultats des essais avec notamment les activités, avant et après traitement par le dispositif de l'invention, sont regroupés dans le tableau VI.

Tableau VI

| Effluents traités avec l'installation pilote selon l'invention | | | | | |
|---|---|---|---|---|---|
| N° effluent | 1 | 2 | 3 | | |
| Volume ($m^3$) | 16 | 18 | 12 | | |
| Charge saline (mg/l) | 0,06 | 0,02 | 0,02 | | |
| Radioéléments présents | U | Am | U | Pu | Am |
| Activité avant traitement (Bq/$m^3$) | 180 | 16 | 320 | 36 | 531 |
| Activité après traitement (Bq/$m^3$) | <LD* | <LD* | <LD* | <LD* | <LD* |
| * Les limites de détection (LD) sont comprises entre 1, 5 et 2, 5 Bq/$m^3$. | | | | | |

L'effluent 1 provenait de l'écoulement accidentel d'une eau de pluie à travers un bâtiment. Cet effluent, qui n'avait subi aucun traitement préalable contenant, par ailleurs, de la boue, et des algues, des feuilles.

L'effluent 2 était un effluent qui n'avait pas pu être décontaminé de manière ultime par l'installation actuelle de traitement des effluents, mettant en oeuvre une évaporation et une microfiltration et correspondant à l'art antérieur.

En effet, comme nous l'avons déjà signalé, cette dernière ne permet pas de décontaminer de manière ultime tous les types d'effluent. Le traitement de cet effluent a été rendu possible par l'installation de l'invention assurant une activité nulle.

L'effluent 3 était un effluent de très faible activité qui n'avait subit aucun traitement préalable particulier, tel qu'un traitement chimique ou une évaporation. Les effluents possédant ce type d'activité constituent une grande part des effluents d'un centre, tel que celui de VALDUC, en outre, le traitement direct de ce type d'effluent par le procédé selon l'invention constitue une alternative très intéressante qui peut être intégrée au sein de l'installation actuelle de

traitement des effluents. Ce type de traitement permet notamment d'éviter l'étape d'évaporation qui est beaucoup plus lourde à mettre en oeuvre.

La diversité des effluents traités montre que l'installation selon l'invention est capable de réaliser la récupération de traces d'actinides de tous les types d'effluents de très faible activité produits par le centre de VALDUC.

Ceci est un avantage important par rapport au procédé et à l'installation actuels, qui ne permet pas de décontaminer de manière ultime tous les types d'effluents.

Les volumes importants qui ont été traités par l'installation pilote de l'invention sont significatifs et permettent d'en démontrer la supériorité vis-à-vis de l'installation d'ultrafiltration, actuellement utilisée pour réaliser le traitement ultime en aval de la tour d'évaporation, aussi bien en termes d'efficacité, que de coûts d'investissement, de fonctionnement et de maintenance.

Exemple 5

a) Installation

Dans cet exemple, son effectué, au stade du laboratoire en boîte à gants, divers essais pour traiter les effluents en amont de l'évaporateur industriel, à l'aide d'une installation selon l'invention.

Cette installation, qui est comparable à celle de la figure 1, est toutefois légèrement modifiée, elle est décrite à la figure 2.

A l'intérieur de la boîte à gants, l'installation expérimentale, conforme à la présente invention, est composée principalement des éléments suivants :

- une capacité (201) qui reçoit directement les effluents de la station de traitement du centre de VALDUC, une pompe volumétrique péristaltique (202), une capsule de filtration (203) avec un diamètre des pores de 50 $\mu$m ;
- deux colonnes de résine montées en série : une première colonne (204) remplie de silice (gel de silice) ou d'une résine de type polyacrylate (AMBERLITE® IRC86RF) et une seconde colonne (205) remplie de silice (gel de silice) modifiée par les polyazacycloalcanes, de préférence, il s'agit de la résine dénommée Si2323trPr, qui a été préparée soit par le procédé, dit « voie 1 », soit par le procédé, dit « voie 2 ». Chaque colonne a un diamètre de 1 cm et une hauteur de 30 cm.

Chaque colonne contient 12 g de gel de silice ou de résine ;

- un thermostat à circulation pour maintenir la température des colonnes à 60°C ;
- une cuve (206) remplie d'$HNO_3$ 1N, d'eau distillée, ou de solution tampon, reliée à une pompe volumétrique péristaltique, pour réaliser respectivement la régénération et le conditionnement des résines de chacune des colonnes (204, 205) ;
- une cuve de récupération des éluats des colonnes (208) ;
- des vannes à 3 voies (209, 210, 211, 212) à l'entrée et à la sortie des colonnes.

b) Effluents traités

L'effluent prélevé pour réaliser cette étude possède une activité radiologique totale d'environ 6,1 kBq/$m^3$ (tableau VII) et une charge saline de 0,78 mg/l. Il n'a subi aucun traitement chimique préalable, tel que précipitation ou floculation. L'analyse panoramique (tableau IX) de cet effluent montre que les actinides ne représentent qu'une infime partie des éléments présents (< 1 ppm). Cet effluent contient très majoritairement des éléments alcalins et alcalinoterreux (99,29 %), principalement du Na (84,38 %), du Ca (11,01 %), du K (3,44 %) et du Mg (0,45 %). Cet effluent contient également du B (0,59 %) et quelques éléments métalliques (Ti, Ni, W, Al et Zn ; pour un total de 0,15 %).

Tableau VII

| Activité et concentration de l'effluent prélevé ($\pm$ 20 %) | | | |
|---|---|---|---|
| | U | Pu | Am |
| Activité (kBq/$m^3$) | 4,7 | 0,54 | 0,83 |
| Concentration | 185 ppb | 0,24 ppt | 6 ppq |

c) Procédure

Tout comme le fonctionnement de l'installation et de l'installation pilote selon l'invention, précédemment présentées, le fonctionnement de l'installation expérimentale peut être décomposée en deux phases :

1) Fixation

Les effluents en provenance directe de la station de traitement des effluents de VALDUC sont introduits dans la boîte à gants, où ils sont déversés dans la capacité (201), puis repris par la pompe (202).

Après passage sur le filtre (203) permettant de se débarrasser des impuretés (poussières, particules,...), la solution transite à travers le lit de résines de chaque du bas vers le haut. La première colonne (204), comme on l'a déjà vue, remplie de silice ou d'une résine de type polyacrylate (AMBERLITE® IRC86RF) et la seconde colonne (205) remplie de silice modifiée par des macrocycles. Ces derniers s'écoulent en tête de colonne et sont récupérés dans la capacité (208), où des prélèvements réguliers sont effectués pour être analysés par spectrométrie $\alpha$ ou ICP-MS.

2) Régénération

La régénération des résines s'effectue par élution d'acide nitrique 2N du haut vers le bas de la colonne. Les éluats sont récupérés dans la capacité (208), où des prélèvements réguliers sont effectués pour analyses. Les résines nécessitent ensuite un reconditionnement avant d'entamer un nouveau cycle. Celui-ci s'effectue par élution d'eau, puis d'une solution tampon à pH 4,7, toujours du haut vers le bas de la colonne.

d) Combinaisons de résines mises en oeuvre

Les trois combinaisons de résines suivantes ont été envisagées (tableau VIII).

Tableau VIII

| Combinaison | $1^{ere}$ colonne | $2^{eme}$ colonne |
|---|---|---|
| (a) | Silice | Si2323trPr (« voie 1 ») |
| (b) | Silice | Si2323trPr (« voie 2 ») |
| (c) | AMBERLITE® IRC86RF | Si2323trPr (« voie 2 ») |

e) Résultat et discussion

Les résultats des essais effectués sont regroupés dans le tableau IX.

Les profils d'élution observés montrent que l'effluents est totalement décontaminés pour un volume inférieur au volume de fuite en radioéléments (v = 1 litre environ). Des analyses panoramiques ont été réalisées juste avant ce volume de fuite, afin d'apprécier la sélectivité du procédé (voir le tableau IX).

Tableau IX

Analyse panoramique réalisée après élution d'un litre d'effluent[1] (avant le volume de fuite)

| Famille d'éléments | Elément | Effluent de départ | | Après passage sur $SiO_2$ + Si2323trPr (voie 1) | | Après passage sur $SiO_2$ + Si2323trPr (voie 2) | | Après passage sur AMBERLITE IRC86 + Si2323trPr (voie 2) | |
|---|---|---|---|---|---|---|---|---|---|
| | | c (ppb) | Taux | c (ppb) | Taux d'épuration | c (ppb) | Taux d'épuration | c (ppb) | Taux d'épuration |
| Alcalins/ Alcalino-terreux | Na | 330000 | 84,38% | 300000 | 9% | 307000 | 7% | 260000 | 11% |
| | K | 23000 | 3,44% | 21000 | 9% | 23000 | 0% | 16000 | 30% |
| | Ca | 75000 | 11,01% | 65000 | 13% | 75000 | 0% | <5000 | > 87% |
| | Mg | 1980 | 0,45% | 1770 | 11% | 1920 | 3% | 170 | 91% |
| | Sr | 84 | 59 ppm | 68 g | 19 %. | 81 | 3% | <50 | >40 % |
| | Ba | 240 | 100 ppm | 220 | 8% | 275 | 0% | <50 | > 79 % |
| | Li, Be, Cs | <50 | | <50 | | <50 | | <50 | |
| Métaux de transition | Ti | 240 | 300 ppm | 210 | 12 % | 230 | 4% | <50 | > 75% |
| | Ni | 370 | 450 ppm | 350 | 5% | 370 | 0% | 240 | 33% |
| | W | 50 | 18 ppm | 45 | 10% | 48 | 4% | <20 | > 60 % |
| | Fe, V, Cr, Mn, Co, Mo, Ag | <50 | | <50 | | <50 | | <50 | |
| Famille du Zn Métaux lourds | Al | 100 | 200 ppm | 50 | 50% | 50 | 50% | <50 | > 50 % |
| | Zn | 514 | 500 ppm | 327 | 36% | 319 | 38% | 320 | 31% |
| | Ga, As, Cd, Sn, Pb | <50 | | <50 | | <50 | | <50 | |
| Autres éléments | B | 1130 | 0,59 % | 960 | 15 % | 960 | 15 % | 950 | 16 % |
| | Th | <50 | | <50 | | <50 | | <50 | |

[1] Incertitude sur les analyses : ± 10 % ; incertitude sur les taux : ± 20 %.

Au vu de ces résultats :

- Les alcalins et alcalino-terreux sont très peu retenus par les systèmes (a) et (b), les taux d'épuration oscillent entre 8 et 19 % pour (a) et entre O et 7 % pour (b). La sélectivité des résines Si2323trPr est donc importante pour cette famille d'éléments et elle augmente sensiblement lorsqu'on passe d'une résine élaborée par la « voie 1 » à une résine élaborée par la « voie 2 ».

Si la première colonne contient de la résine AMBERLITE® IRC86RF (c), l'effluent se retrouve presque totalement épuré en éléments alcalino-terreux (Ca, Mg, Sr et Ba), mais par contre, les taux d'épuration ne sont que de 21 et 30 % pour les éléments alcalins Na et K, respectivement.

- Les métaux de transition sont également très peu retenus par les systèmes (a) et (b), les taux d'épuration oscillent entre 5 et 12 % pour (a) et entre 0 et 4 % pour (b). La sélectivité des résines Si2323trPr est donc importante pour cette famille d'éléments et encore une fois, elle semble augmenter sensiblement lorsqu'on passe d'une résine élaborée par la voie 1 à une résine élaborée par la voie 2.

Si la première colonne contient de la résine AMBERLITE® IRC86RF (c), l'effluent se retrouve presque totalement épuré en Ti et W, mais par contre le taux d'épuration n'est que de 35 % pour le Ni.

- Le Zn et l'Al sont moyennement retenus sur les différentes colonnes : les taux d'épuration sont de l'ordre de 40 % dans tous les cas.
- Enfin, le B est légèrement retenu, avec des taux d'épuration identiques, de l'ordre de 15 %.

Ces expériences montrent que ces résines possèdent une très bonne sélectivité, particulièrement vis-à-vis des alcalins, alcalino-terreux et métaux de transition. La sélectivité est encore plus marquée pour la résine Si2323trPr élaborée selon la « voie 2 », par rapport à la résine Si2323trPr, élaborée selon la « voie 1 ». Par ailleurs, le couplage de ces résines avec la résine AMBERLITE® IRC86RF permet d'épurer une bonne partie des alcalino-terreux et des métaux de transition.
Malgré cette sélectivité importante, la forte salinité des effluents (essentiellement en alcalins et alcalino-terreux) pris à ce niveau du cycle de traitement contribue à saturer rapidement les résines.
Ainsi, pour les métaux de la série des actinides, ces expériences montrent qu'il est possible de traiter directement des effluents possédant ce niveau d'activité, malgré des volumes de fuite assez faibles observés (compris entre 50 et 75 volumes de colonne), imputables à cet effet de sel important (les actinides ne représentent qu'une fraction de ppm de la totalité des éléments). Cette étude montre que l'efficacité d'un tel procédé de traitement des effluents radioactifs dépend moins du niveau d'activité de l'effluent que de sa charge saline.

## Revendications

1. Procédé d'élimination des cations métalliques contenus dans un liquide, dans lequel ledit liquide est mis en contact, à une température supérieure ou égale à 60°C, avec une résine échangeuse d'ions chélatante constituée d'un polyazacycloalcane greffé sur un support solide, ladite résine ayant été conditionnée préalablement à ladite mise en contact à un pH de 4 à 6.

2. Procédé selon la revendication 1, dans lequel la mise en contact est réalisée à une température de 60 à 80°C.

3. Procédé selon la revendication 1, dans lequel le pH de conditionnement est de 4 à 5.

4. Procédé selon l'une quelconque des revendications 1 à 3, dans lequel le conditionnement de ladite résine est réalisée par mise en contact de ladite résine avec une solution tampon, notamment aqueuse, dont le pH est de 4 à 6, éventuellement précédée et/ou suivie d'un rinçage de la résine avec le solvant majoritaire du liquide à traiter, notamment avec de l'eau distillée.

5. Procédé selon la revendication 1, réalisé en continu, ladite résine étant placée dans au moins une colonne traversée par un courant du liquide à traiter.

6. Procédé selon la revendication 1, comprenant, en outre, une étape de régénération de ladite résine, lorsque celle-ci est saturée par les métaux fixés.

**7.** Procédé selon la revendication 5 et la revendication 6, dans lequel ladite régénération est réalisée en faisant traverser la ou les colonne(s) dans le sens inverse du sens de circulation du liquide à traiter par une solution de régénération.

**8.** Procédé selon la revendication 7, dans lequel ladite solution de régénération est choisie parmi les solutions acides, par exemple, d'acide nitrique.

**9.** Procédé selon la revendication 7 ou la revendication 8, dans lequel à l'issue de l'étape de régénération, ladite solution de régénération contenant les métaux initialement fixés sur la résine est traitée pour récupérer les métaux.

**10.** Procédé selon l'une quelconque des revendications 1 à 9 comprenant une étape préalable de traitement du liquide par mise en contact avec un échangeur d'ions ou un adsorbant organique ou minéral différent de ladite résine polyazacycloalcane greffé sur un support.

**11.** Procédé selon la revendication 10, dans lequel ledit adsorbant est choisi parmi les gels de silice.

**12.** Procédé selon la revendication 10, dans lequel ledit échangeur d'ions est choisi parmi les résines de type polyacrylate, les résines de type AMBERLITE®.

**13.** Procédé selon la revendication 10, dans lequel ladite étape de traitement préalable est réalisée en continue, ledit échangeur d'ions ou adsorbant étant placé dans au moins une colonne traversée par un courant de liquide à traiter et positionnée(s) en amont de ladite colonne remplie de résine.

**14.** Procédé selon la revendication 11, dans lequel ledit échangeur d'ions ou adsorbant est régénéré lorsqu'il est saturé par les métaux fixés dans les mêmes conditions que la résine et simultanément à la régénération de celle-ci et avec la même solution de régénération.

**15.** Procédé selon la revendication 1, dans lequel lesdits cations de métaux sont des cations de métaux choisi parmi les métaux de transition, les métaux lourds, les métaux du groupe IIIA du tableau périodique, les lanthanides, les actinides, et les métaux alcalino-terreux.

**16.** Procédé selon la revendication 13, dans lequel lesdits cations métalliques sont choisis parmi les cations U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba et Ra.

**17.** Procédé selon l'une quelconque des revendications 1 à 16, dans lequel le liquide traité est un liquide aqueux.

**18.** Procédé selon l'une quelconque des revendications 1 à 17, dans lequel le liquide traité est un effluent aqueux radioactif de faible activité.

**19.** Procédé selon la revendication 18, dans lequel ledit effluent est l'effluent aqueux de faible activité issu de l'évaporateur industriel de l'installation de traitement des effluents d'une installation nucléaire.

**20.** Procédé selon la revendication 16 et la revendication 17, dans lequel le liquide est un fluide biologique, tels que le sang et les cations éliminés sont le cuivre et l'aluminium.

**21.** Procédé selon l'une quelconque des revendications 1 à 20, dans lequel ladite résine échangeuse d'ions chélatante constituée d'un polyazacycloalcane greffé sur un support solide répond à l'une des trois formules (I) (II) (III) ci-dessous :

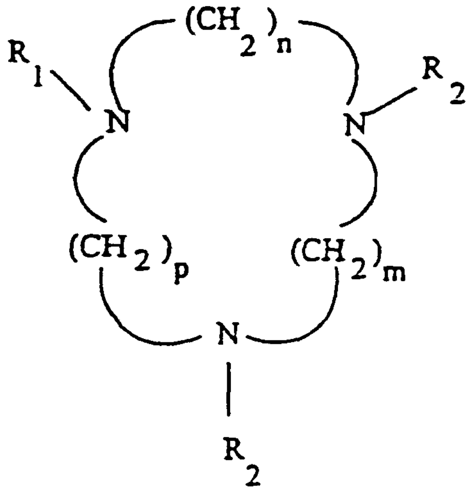

(I)

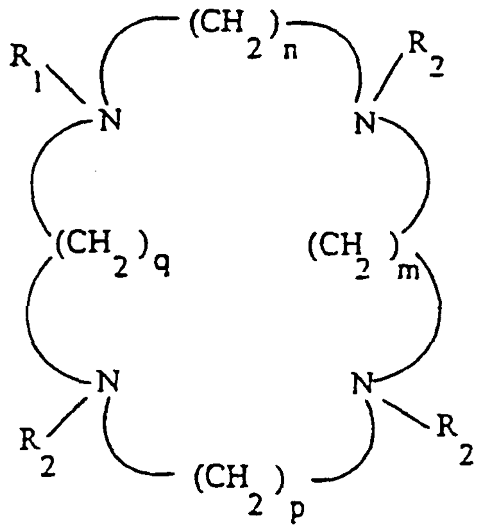

(II)

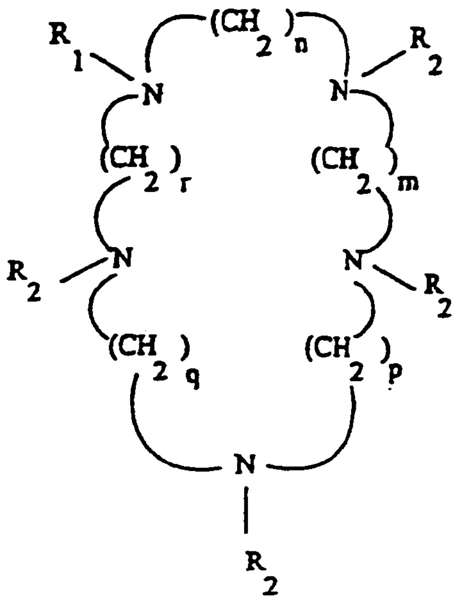

(III)

dans lesquelles n, m, p, q, r qui peuvent être identiques ou différents sont égaux à 2 ou 3, $R_1$ est un support solide, $R_2$ représente l'atome d' hydrogène ou le groupe $(CH_2)_2$-$R_3$, $R_3$ étant un groupement fonctionnel choisi dans le groupe constitué par COOH, $CONH_2$, $CH_2OH$, CN ou $COOR_4$, $R_4$ représentant un groupe alkyle ou benzyle, ou $R_2$ représente le groupe -$(CH_2)$-$R_5$, $R_5$ représentant COOH ou $PO_3R_6$, $R_6$ représentant un groupe alkyle ou l'hydrogène.

**22.** Procédé selon l'une quelconque des revendications 1 à 21, dans lequel le support solide est un polymère organique réticulé ou non.

**23.** Procédé selon la revendication 22, dans lequel le support solide est un reste d'un polymère organique réticulé ou non à terminaison halogénure d'alkyle, de préférence à terminaison chlorure d'alkyle.

**24.** Procédé selon la revendication 23, dans lequel le support solide est un reste d'un polystyrène chloro-méthylé.

**25.** Procédé selon la revendication 24, dans lequel la granulométrie dudit polystyrène chloro-méthylé est comprise entre 20 et 400 mesh et, de préférence, entre 20 et 70 mesh.

**26.** Procédé selon la revendication 21, dans lequel $R_1$ est un support solide dérivé de la silice répondant à la formule :

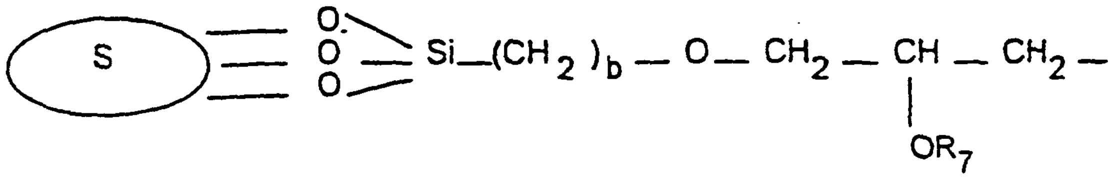

où à la formule :

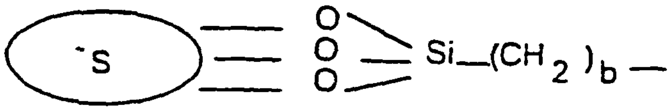

S représentant un gel de silice, b étant compris entre 1 et 4 et, de préférence, égal à 3 et $R_7$ étant un groupe alkyle ou un atome d'hydrogène.

**27.** Procédé selon la revendication 26, dans lequel la granulométrie du support solide dérivé de la silice est comprise entre 20 et 400 mesh et, de préférence, entre 20 et 70 mesh.

**28.** Procédé selon la revendication 21, dans lequel ladite résine est choisie parmi les résines suivantes :

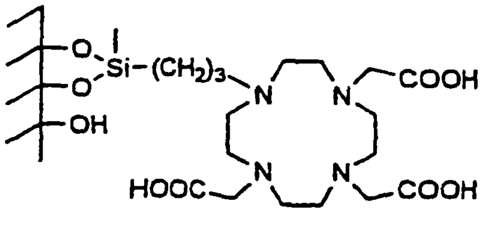

**Si2222trA**

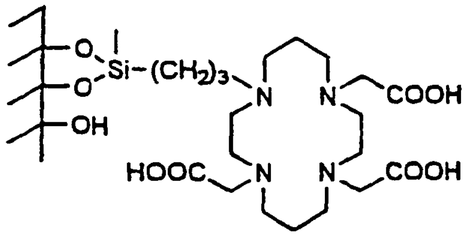

**Si2323trA**

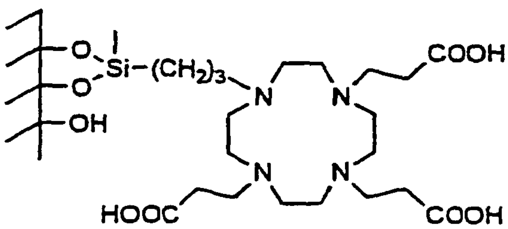

**Si2222trPr**

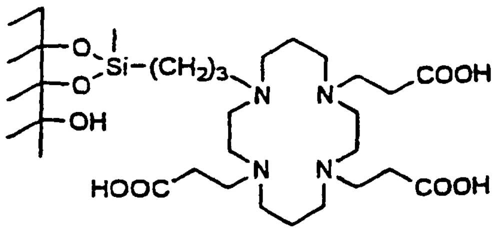

**Si2323trPr**

**29.** Procédé selon la revendication 1, dans lequel ledit support solide est de la silice, et ladite résine est préparée par un procédé dans lequel on fait réagir la silice avec un bras espaceur, puis avec un polyazacycloalcane, et on réalise ensuite la substitution des fonctions amines libres du polyazacycloalcane par des groupes comportant notamment une fonction acide carboxylique.

**30.** Procédé selon la revendication 1, dans lequel ledit support solide est de la silice et ladite résine est préparée par un procédé dans lequel on fait, tout d'abord, réagir un polyazacycloalcane non substitué, tel que le cyclame ou le cyclène, avec un bras espaceur, puis on greffe ledit polyazacycloalcane portant un bras espaceur sur la silice.

**31.** Procédé selon la revendication 30, dans lequel ledit polyazacycloalcane portant un bras espaceur est, en outre, fonctionnalisé, préalablement à son greffage sur la silice.

**32.** Procédé selon la revendication 30 ou de la revendication 31, dans lequel la quantité de polyazacycloalcane greffé par unité de masse de support solide, tel que de la silice, est supérieure à 0,4 $mmol.g^{-1}$.

**33.** Installation d'élimination des cations métalliques contenus dans un liquide comprenant au moins une colonne remplie d'une résine échangeuse d'ions chélatante constituée d'un polyazacycloalcane fixé sur un support solide, des moyens pour faire traverser ladite colonne par un courant de liquide à traiter, des moyens pour conditionner ladite résine à un pH de 4 à 6 et des moyens pour chauffer ladite résine à une température supérieure ou égale à 60°C.

**34.** Installation selon la revendication 33, comprenant, en outre, une colonne remplie d'un échangeur d'ions ou d'un adsorbant organique ou minéral différent de ladite résine polyazacycloalcane greffé sur un support solide, placée en amont de ladite colonne remplie de résine.

**35.** Installation selon la revendication 33 ou la revendication 34, comprenant, en outre, des moyens pour régénérer ladite résine échangeuse d'ions chélatante et, éventuellement, ledit échangeur d'ions ou adsorbant organique ou minéral.

## Claims

**1.** Method for removal of metal cations contained in a liquid in which said liquid is brought into contact at a temperature higher than or equal to 60°C, with a chelating ion exchange resin formed from polyazacycloalkane grafted on a solid support, said resin having been conditioned, previously to said contacting, at a pH of 4 to 6.

**2.** Method according to Claim 1 in which the contacting is carried out at a temperature of 60 to 80°C.

**3.** Method according to Claim 1 in which the conditioning pH is 4 to 5.

**4.** Method according to any one of Claims 1 to 3 in which the conditioning of said resin is carried out by contacting said resin with a buffer solution, especially aqueous, in which the pH is 4 to 6, possibly preceded and/or followed by a rinsing of the resin with a major solvent of the liquid to be treated, especially with distilled water.

**5.** Method according to Claim 1 carried out continuously, said resin being placed in at least one column passed through by a current of liquid to be treated.

**6.** Method according to Claim 1 comprising, in addition, a regeneration step of said resin, when the latter is saturated by the fixed metals.

**7.** Method according to Claim 5 and Claim 6 in which said regeneration is carried out by passing a regeneration solution through the column(s) in the reverse direction from the direction of circulation of the liquid to be treated.

**8.** Method according to Claim 7 in which said regeneration solution is chosen from the acid solutions, for example, nitric acid.

**9.** Method according to Claim 7 or Claim 8 in which at the end of the regeneration step, said regeneration solution containing the metals initially fixed on the resin is treated to recover the metals.

**10.** Method according to any one of Claims 1 to 9 comprising a prior step for treatment of the liquid by contacting with an ion exchanger or organic or mineral adsorbent different from said polyazacycloalkane resin grafted on a support.

**11.** Method according to Claim 10 in which said adsorbent is chosen from the silica gels.

**12.** Method according to Claim 10 in which said ion exchanger is chosen from resins of the polyacrylate type, resins of the AMBERLITE® type.

**13.** Method according to Claim 10 in which said prior treatment step is carried out continuously, said ion exchanger or

adsorbent being placed in at least one column passed through by a current of liquid to be treated and positioned upstream of said column filled with resin.

**14.** Method according to Claim 11 in which said ion exchanger or adsorbent is regenerated when it is saturated by the fixed metals under the same conditions as the resin and at the same time as regeneration of the latter and with the same regeneration solution.

**15.** Method according to Claim 1 in which said metal cations to be removed are metal cations chosen from transition metals, heavy metals, metals from group IIIA of the periodic table, lanthanides, actinides and alkaline-earth metals.

**16.** Method according to Claim 13 in which said metal cations are chosen among the cations of U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba and Ra.

**17.** Method according to any one of Claims 1 to 16 in which the treated liquid is an aqueous liquid.

**18.** Method according to any one of Claims 1 to 17 in which the treated liquid is a radioactive aqueous effluent with low activity.

**19.** Method according to Claim 19 in which said effluent is the aqueous effluent with low activity originating from the industrial evaporator of the treatment installation of effluents from a nuclear installation.

**20.** Method according to Claim 16 and Claim 17 in which the liquid is a biological fluid, such as blood and the cations removed are copper and aluminium.

**21.** Method according to any one of Claims 1 to 20 in which said chelating ion exchange resin formed from polyazacycloalkane grafted on a solid support fulfils one of the three formulas (I), (II) and (III) below:

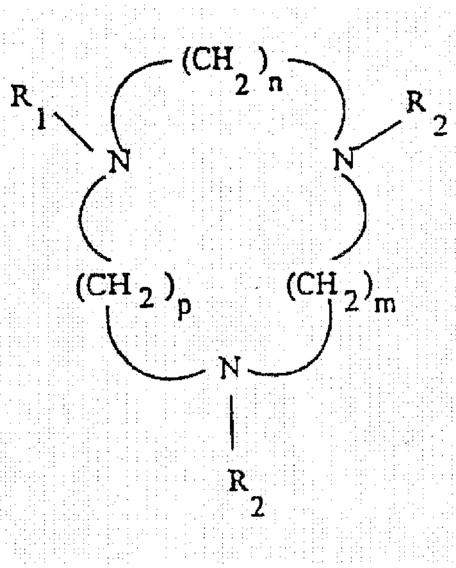

(I)

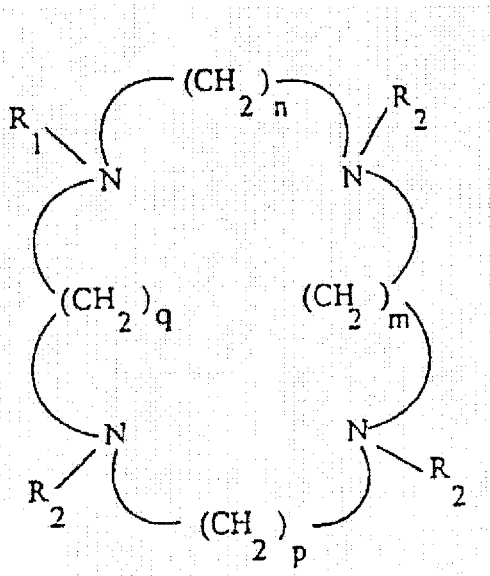

(II)

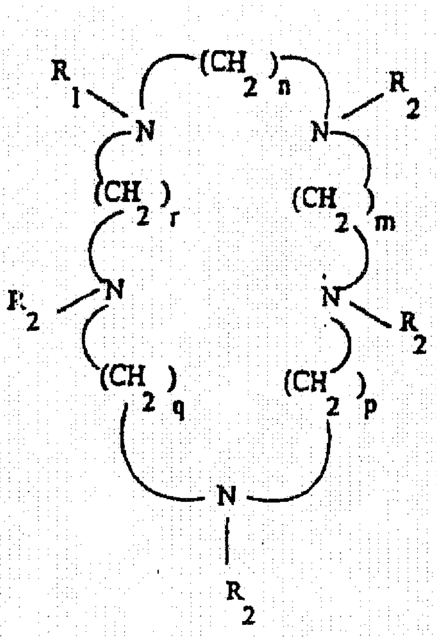

(III)

in which n, m, p, q, r which may the same or different are equal to 2 or 3, R1 is a solid support, R2 represents the hydrogen atom or the (CH2)2-R3 group, R3 being a functional group chosen from the group formed by COOH, CONH2, CH2OH, CN or COOR4, R4 representing an alkyl or benzyl group , or R2 represents the -(CH2)-R5 group, R5 representing COOH or P03R6, R6 representing an alkyl group or hydrogen.

**22.** Method according to any one of Claims 1 to 21 in which the solid support is an organic polymer that may or may not be crosslinked.

**23.** Method according to Claim 22 in which the solid support is a residue of an organic polymer that may or may not be crosslinked with alkyl halide end, preferably alkyl chloride end.

**24.** Method according to Claim 23 in which the solid support is a residue of chloromethyl polystyrene.

**25.** Method according to Claim 24 in which the grain size distribution of said chloromethyl polystyrene is between 20 and 400 mesh and, preferably, between 20 and 70 mesh.

**26.** Method according to Claim 21 in which R1 is a solid support derived from silica fulfilling formula:

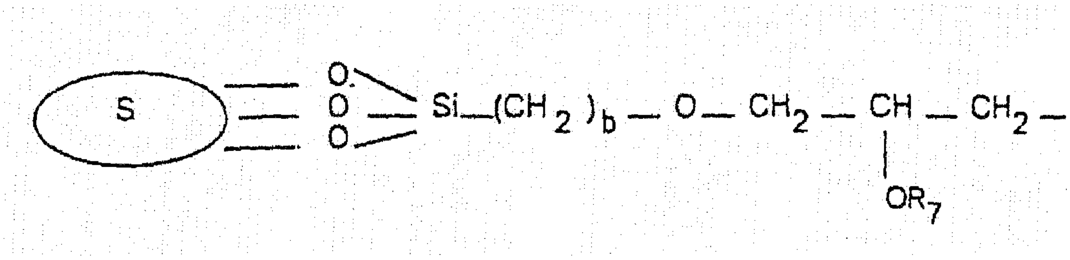

where [sic; or] the formula:

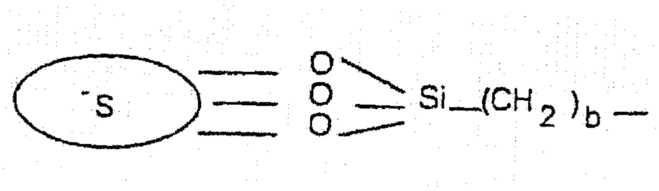

S representing a silica gel, b being between 1 and 4 and preferably equal to 3 and R7 being an alkyl group or a hydrogen atom.

**27.** Method according to Claim 26 in which the grains size distribution of the solid support derived from silica is between 20 and 400 mesh and, preferably between 20 and 70 mesh.

**28.** Method according to Claim 21 in which said resin is chosen from the following resins:

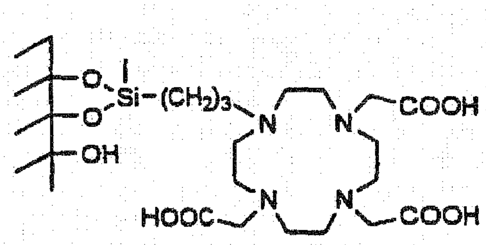

**Si2222trA**

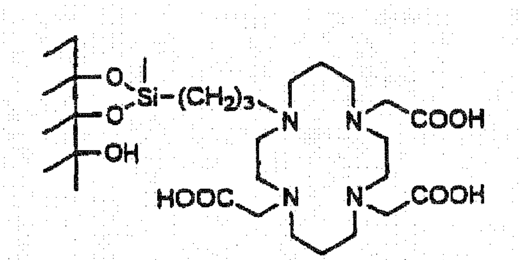

**Si2323trA**

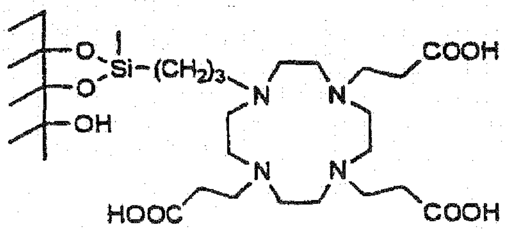

Si2222trPr

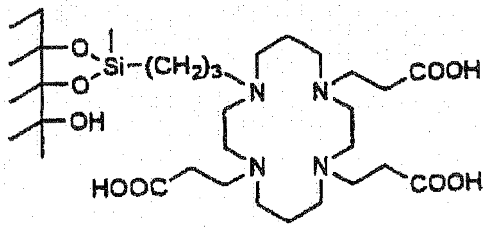

Si2323trPr

**29.** Method according to Claim 1 in which said solid support is silica, and said resin is prepared by a method in which silica is reacted with a spacer arm, then with azacycloalkane and then the substitution of the free amine functions of the polyazacycloalkane is carried out by groups especially including a carboxylic function.

**30.** Method according to Claim 1 in which said solid support is silica and said resin is prepared by a method in which first, an unsubstituted polyazacycloalkane, such as cyclam or cyclene is reacted with a spacer arm, then said polyazacycloalkane carrying a spacer arm is grafted on the silica.

**31.** Method according to Claim 30 in which in addition, said polyazacycloalkane carrying a spacer arm is functionalized prior to its grafting on the silica.

**32.** Method according to Claim 30 or Claim 31 in which the amount of polyazacycloalkane grafted per unit weight of solid support, such as silica is greater than 0.4 mmol.g-1.

**33.** Installation for removal of metal cations contained in a liquid comprising at least a column filled with a chelating ion exchange resin formed from a polyazacycloalkane fixed on a support, means for causing a current of liquid to be treated to pass through said column, means for conditioning said resin at a pH of 4 to 6 and means for heating said resin to a temperature greater than or equal to 60°C.

**34.** Installation according to Claim 33 comprising, in addition, a column filled with ion exchanger or organic or mineral adsorbent different from said polyazacycloalkane resin grafted on a support, placed upstream of said column filled with resin.

**35.** Installation according to Claim 33 or Claim 34 comprising in addition, means for regenerating said chelating ion exchange resin and possibly, said ion exchanger or organic or mineral adsorbent.

**Patentansprüche**

**1.** Verfahren zur Eliminierung von Metallkationen, die in einer Flüssigkeit enthalten sind, bei dem die genannte Flüssigkeit mit einem Chelat-bildenden Ionenaustauscherharz, bestehend aus einem Polyazacycloalkan, das auf einen festen Träger aufgepfropft ist, bei einer Temperatur von ≥ 60 °C in Kontakt gebracht wird, wobei das genannte Harz vor dem Inkontaktbringen bei einem pH-Wert von 4 bis 6 konditioniert worden ist.

**2.** Verfahren nach Anspruch 1, bei dem das Inkontaktbringen bei einer Temperatur von 60 bis 80 °C durchgeführt wird.

**3.** Verfahren nach Anspruch 1, bei dem der pH-Wert der Konditionierung 4 bis 5 beträgt.

**4.** Verfahren nach einem der Ansprüche 1 bis 3, bei dem die Konditionierung des genannten Harzes durchgeführt wird durch Inkontaktbringen des Harzes mit einer insbesondere wässrigen Pufferlösung, deren pH-Wert 4 bis 6 beträgt, der gegebenenfalls vorausgeht und/oder nachfolgt eine Spülung des Harzes mit dem Hauptlösungsmittel der zu behandelnden Flüssigkeit, insbesondere mit destilliertem Wasser.

5. Verfahren nach Anspruch 1, das kontinuierlich durchgeführt wird, wobei das Harz in mindestens einer Kolonne angeordnet wird, durch die man einen Strom der zu behandelnden Flüssigkeit laufen lässt.

6. Verfahren nach Anspruch 1, das außerdem eine Stufe zur Regenerierung des genannten Harzes umfasst, wenn dieses an den fixierten Metallen gesättigt ist.

7. Verfahren nach Anspruch 5 und nach Anspruch 6, bei dem die genannte Regenerierung durchgeführt wird, indem man eine Regenerierungslösung durch die Kolonne(n) laufen lässt in einer Richtung umgekehrt zur Richtung der Zirkulation der zu behandelden Flüssigkeit.

8. Verfahren nach Anspruch 7, bei dem die genannte Regenerierungslösung ausgewählt wird aus Säurelösungen, beispielsweise Salpetersäure-Lösungen.

9. Verfahren nach Anspruch 7 oder nach Anspruch 8, bei dem am Ende der Regenerierungsstufe die genannte Regenerierungslösung, welche die an dem Harz ursprünglich fixierten Metalle enthält, behandelt wird, um die Metalle zurückzugewinnen (abzutrennen).

10. Verfahren nach einem der Ansprüche 1 bis 9, das eine Stufe zur Vorbehandlung der Flüssigkeit umfasst, in der die Flüssigkeit mit einem lonenaustauscher oder einem organischen oder mineralischen Adsorbens, der (das) von dem genannten, auf einen Träger aufgepfropften Polyazacycloalkan-Harz verschieden ist, in Kontakt gebracht wird.

11. Verfahren nach Anspruch 10, bei dem das genannte Adsorbens unter den Siliciumdioxid-Gelen ausgewählt wird.

12. Verfahren nach Anspruch 10, bei dem der genannte Ionenaustauscher ausgewählt wird unter den Harzen vom Polyacrylat-Typ und den Harzen vom AMBERLITE®-Typ.

13. Verfahren nach Anspruch 10, bei dem die genannte Vorbehandlungsstufe kontinuierlich durchgeführt wird, wobei der genannte Ionenaustauscher oder das genannte Adsorbens in mindestens einer Kolonne angeordnet wird, durch die man die zu behandelnde Flüssigkeit laufen lässt, und die stromaufwärts von der genannten Kolonne, die mit dem Harz gefüllt ist, angeordnet ist (sind).

14. Verfahren nach Anspruch 11, bei dem der lonenaustauscher oder das Adsorbens regeneriert wird, wenn er (es) an den fixierten Metallen gesättigt ist, unter den gleichen Bedingungen wie das Harz und gleichzeitig mit der Regenerierung desselben und mit der gleichen Regenerierungslösung.

15. Verfahren nach Anspruch 1, bei dem es sich bei den genannten Metallkationen um Kationen von Metallen, ausgewählt aus den Übergangsmetallen, den Schwermetallen, den Metallen der Gruppe IIIA des Periodensystems der Elemente, den Lanthaniden, den Actiniden und den Erdalkalimetallen handelt.

16. Verfahren nach Anspruch 13, bei dem die genannten Metallkationen ausgewählt werden unter den Kationen von U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba und Ra.

17. Verfahren nach einem der Ansprüche 1 bis 16, bei dem die behandelte Flüssigkeit eine wässrige Flüssigkeit ist.

18. Verfahren nach einem der Ansprüche 1 bis 17, bei dem die behandelte Flüssigkeit ein radioaktiver wässriger Abstrom mit geringer Aktivität ist.

19. Verfahren nach Anspruch 18, bei dem der genannte Abstrom ein wässriger Abstrom mit geringer Aktivität ist, der aus einem industriellen Verdampfer einer Anlage zur Behandlung von Abströmen aus einem Kernkraftwerk stammt.

20. Verfahren nach Anspruch 16 und nach Anspruch 17, bei dem die Flüssigkeit eine biologische Flüssigkeit, wie z.B. Blut ist und die eliminierten Kationen Kupfer- und Aluminiumkationen sind.

21. Verfahren nach einem der Ansprüche 1 bis 20, bei dem das genannte Chelat-bildende Ionenaustauscherharz, das aus einem auf einen festen Träger aufgepfropften Polyazacycloalkan besteht, einer der drei folgenden Formeln (I), (II), (III) entpspricht:

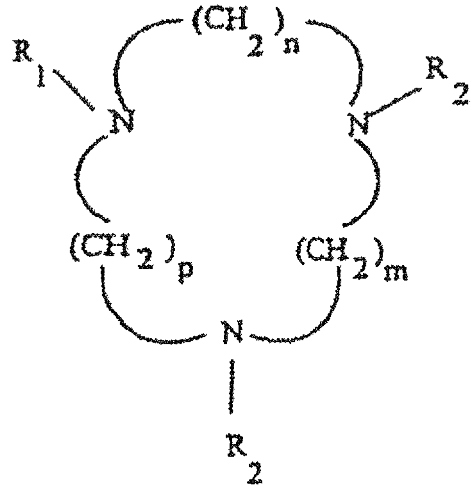

(I)

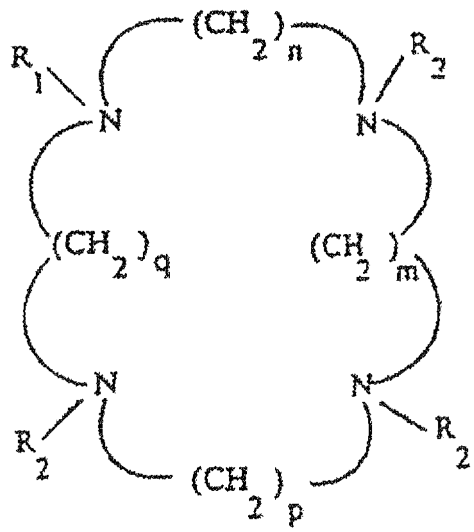

(II)

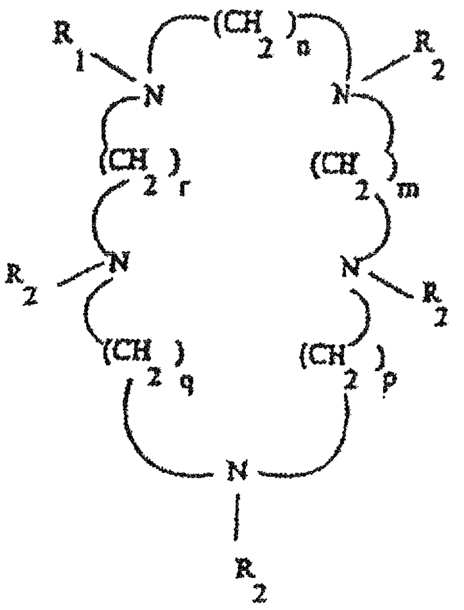

(III)

worin:

n, m, p, q, r, die gleich oder verschieden sein können, der Zahl 2 oder 3 entsprechen,
$R_1$ steht für einen festen Träger,
$R_2$ steht für ein Wasserstoffatom oder die Gruppe $(CH_2)_2$-$R_3$, worin $R_3$ für eine funktionelle Gruppe steht, ausgewählt aus der Gruppe, die besteht aus COOH, $CONH_2$, $CH_2OH$, CN oder $COOR_4$, worin $R_4$ eine Alkyl- oder Benzylgruppe darstellt, oder worin $R_2$ steht für die Gruppe -$(CH_2)$-$R_5$, worin $R_5$ COOH oder $PO_3R_6$ bedeutet, worin $R_6$ eine Alkylgruppe oder ein Wasserstoffatom darstellt.

**22.** Verfahren nach einem der Ansprüche 1 bis 21, bei dem der feste Träger ein vernetztes oder nicht-vernetztes organisches Polymer ist.

**23.** Verfahren nach Anspruch 22, bei dem der feste Träger ein vernetztes oder nicht-vernetztes organisches Polymer mit endständigem Alkylhalogenid, vorzugsweise mit endständigem Alkylchlorid ist.

**24.** Verfahren nach Anspruch 23, bei dem der feste Träger ein Rest eines chlormethylierten Polystyrols ist.

**25.** Verfahren nach Anspruch 24, bei dem die Teilchengröße des genannten chlormethylierten Polystyrols zwischen 20 und 400 mesh, vorzugsweise zwischen 20 und 70 mesh, liegt.

**26.** Verfahren nach Anspruch 21, bei dem $R_1$ steht für einen festen Träger, der abgeleitet ist von einem Siliciumdioxid der folgenden Formel:

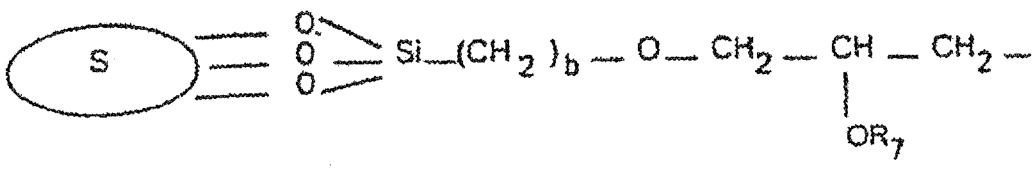

oder der folgenden Formel:

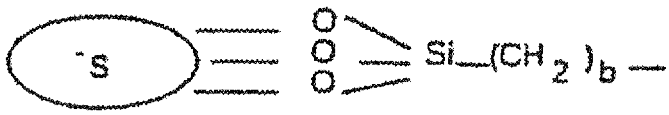

worin:

S steht für ein Silicagel,
b steht für eine Zahl zwischen 1 und 4, vorzugsweise für die Zahl 3, und
$R_7$ steht für eine Alkylgruppe oder ein Wasserstoffatom.

**27.** Verfahren nach Anspruch 26, in dem die Teilchengröße des von dem Siliciumdioxid abgeleiteten festen Trägers zwischen 20 und 400 mesh, vorzugsweise zwischen 20 und 70 mesh, liegt.

**28.** Verfahren nach Anspruch 21, in dem das genannte Harz ausgewählt wird unter den folgenden Harzen:

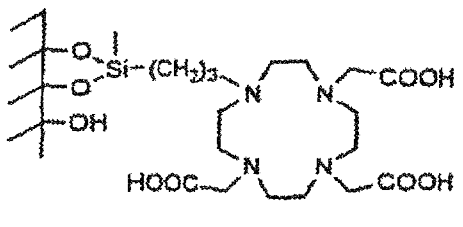

Si2222trA

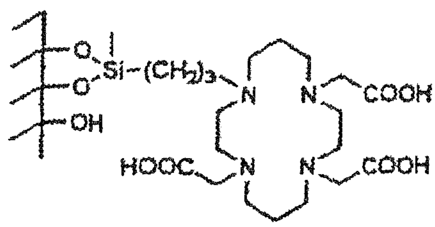

Si2323trA

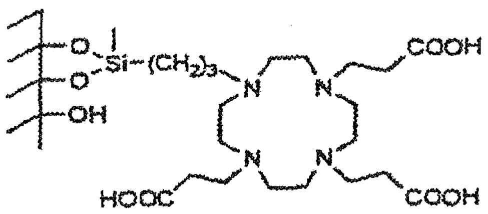

Si2222trPr

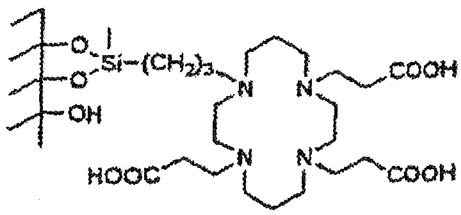

Si2323trPr

**29.** Verfahren nach Anspruch 1, in dem der genannte feste Träger aus Siliciumdioxid besteht und das genannte Harz hergestellt worden ist nach einem Verfahren, bei dem man das Siliciumdioxid mit einem Abstandhalter und danach mit einem Polyazacycloalkan reagieren lässt, und anschließend die freien Aminfunktionen des Polyazacycloalkans durch Gruppen substituiert, die insbesondere eine Carbonsäurefunktion aufweisen.

**30.** Verfahren nach Anspruch 1, bei dem der genannte feste Träger Siliciumdioxid ist und das genannte Harz hergestellt worden ist nach einem Verfahren, bei dem man zunächst ein nicht-substituiertes Polyazacycloalkan, wie z.B. Cyclam oder Cyclen, mit einem Abstandhalter reagieren lässt und dann das genannte Polyazacycloalkan, das einen Abstandhalter trägt, auf das Siliciumdioxid aufpfropft.

**31.** Verfahren nach Anspruch 30, bei dem das genannte Polyazacycloalkan, das einen Abstandhalter trägt, außerdem funktionalisiert wird, bevor man es auf das Siliciumdioxid aufpfropft.

**32.** Verfahren nach Anspruch 30 oder nach Anspruch 31, bei dem die Menge des aufgepfropften Polyazacycloalkans

pro Masseneinheit des festen Trägers, wie z.B. Siliciumdioxid, mehr als 0,4 mmol/g beträgt.

**33.** Anlage zur Eliminierung von Metallkationen, die in einer Flüssigkeit enthalten sind, wobei die Anlage aufweist mindestens eine Kolonne, die mit einem Chelat-bildenden Ionenaustauscherharz gefüllt ist, das aus einem an einem festen Träger fixierten Polyazacycloalkan besteht, Einrichtungen, um einen Strom der zu behandelnden Flüssigkeit durch die Kolonne laufen zu lassen, Einrichtungen zur Konditionierung des genannten Harzes bei einem pH-Wert von 4 bis 6 und Einrichtungen zum Erwärmen des genannten Harzes auf eine Temperatur von ≥ 60 °C.

**34.** Anlage nach Anspruch 33, die außerdem umfasst eine Kolonne, die mit einem Ionenaustauscher oder einem organischen oder mineralischen Adsorbens, der (das) von dem genannten, auf einen festen Träger aufgepfropften Polyazacycloalkan-Harz verschieden ist, gefüllt ist und stromaufwärts von der genannten, mit dem Harz gefüllten Kolonne angeordnet ist.

**35.** Anlage nach Anspruch 33 oder nach Anspruch 34, die außerdem umfasst Einrichtungen zur Regenerierung des genannten Chelat-bildenden Ionenaustauscherharzes und gegebenenfalls des genannten Ionenaustauschers oder des genannten organischen oder mineralischen Adsorbens.

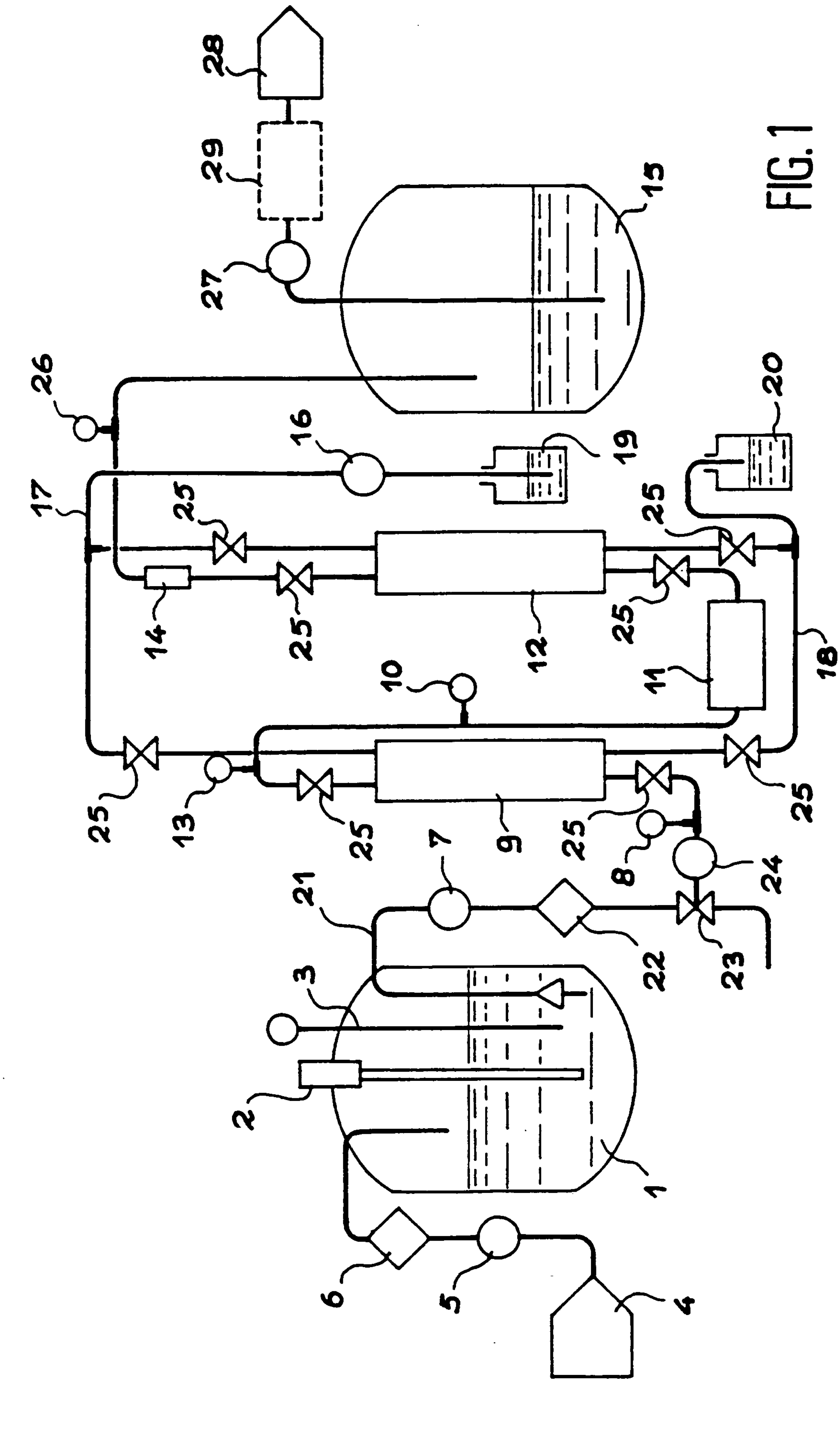


FIG. 1

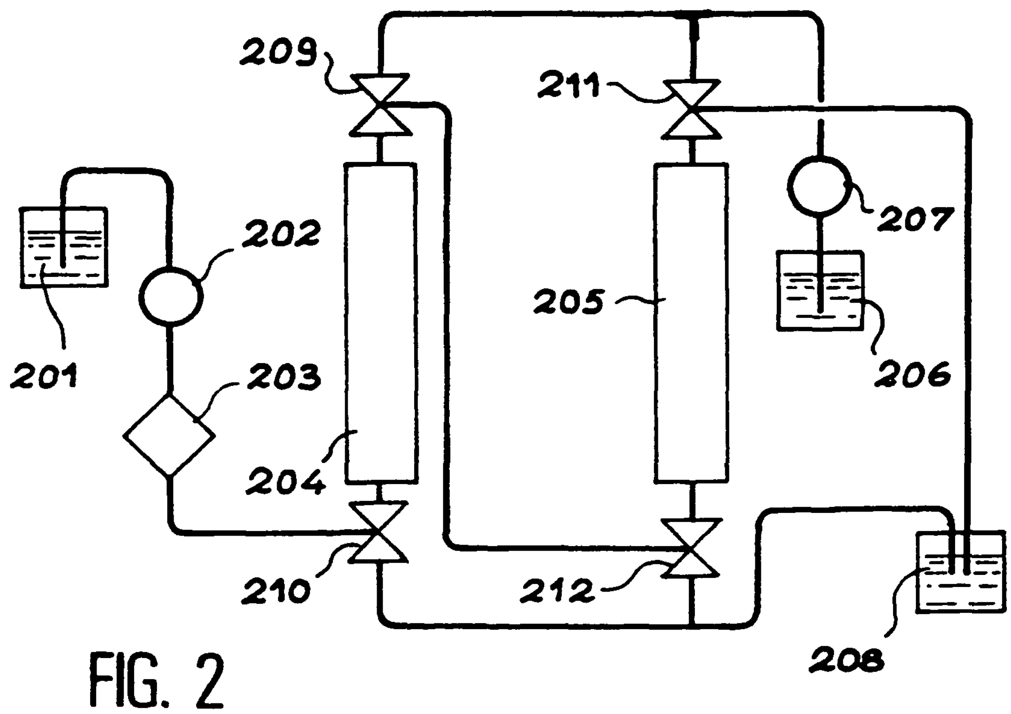
201
202
203
204
205
206
207
208
209
210
211
212

FIG. 2

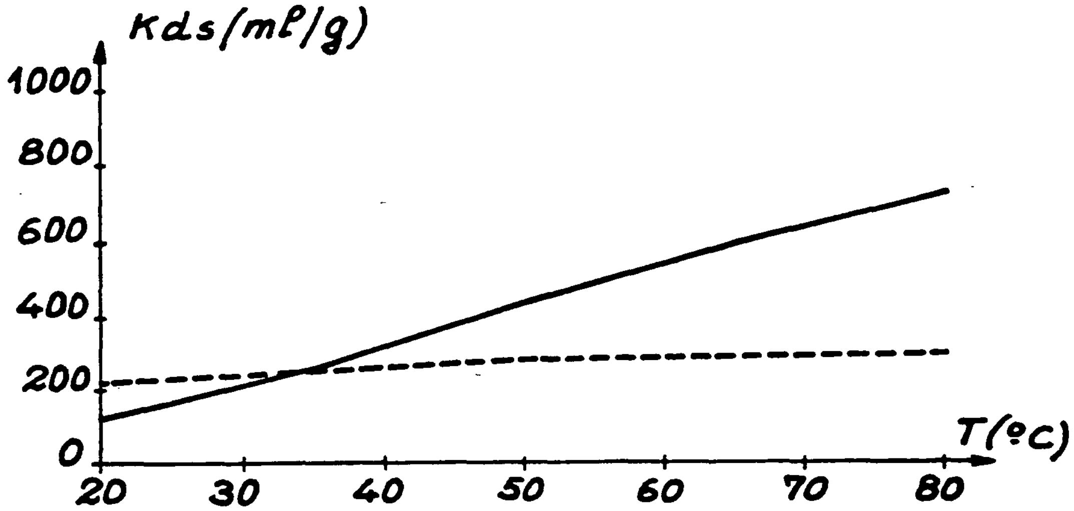
Kds(ml/g)
1000
800
600
400
200
0
20
30
40
50
60
70
80
T(°C)

FIG. 3

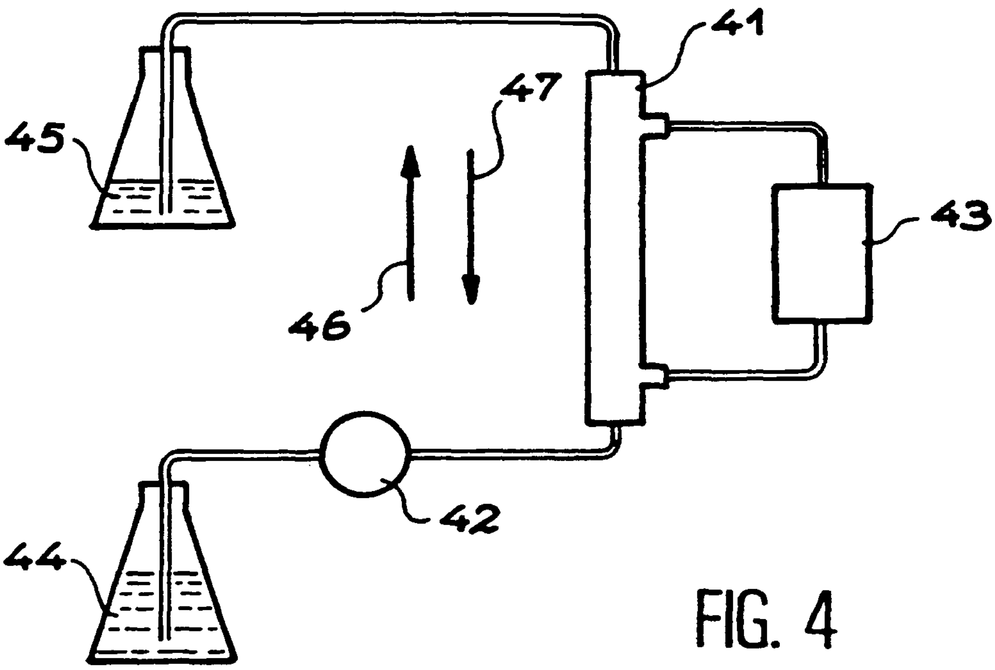


FIG. 4

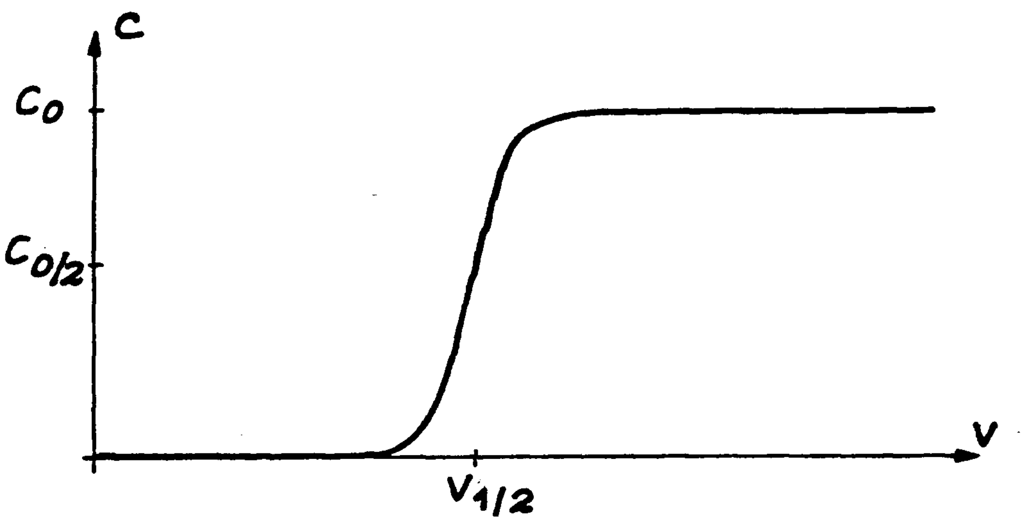


FIG. 5

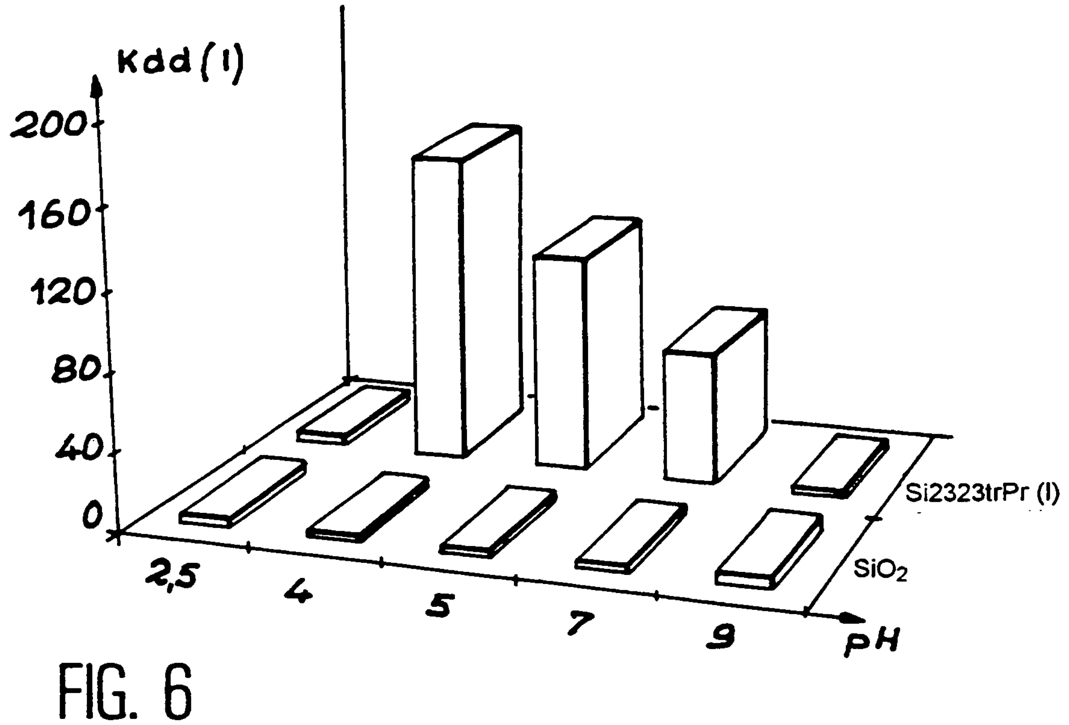
Kdd(l)
200
160
120
80
40
0
2,5
4
5
7
9
pH
Si2323trPr (I)
SiO2

FIG. 6

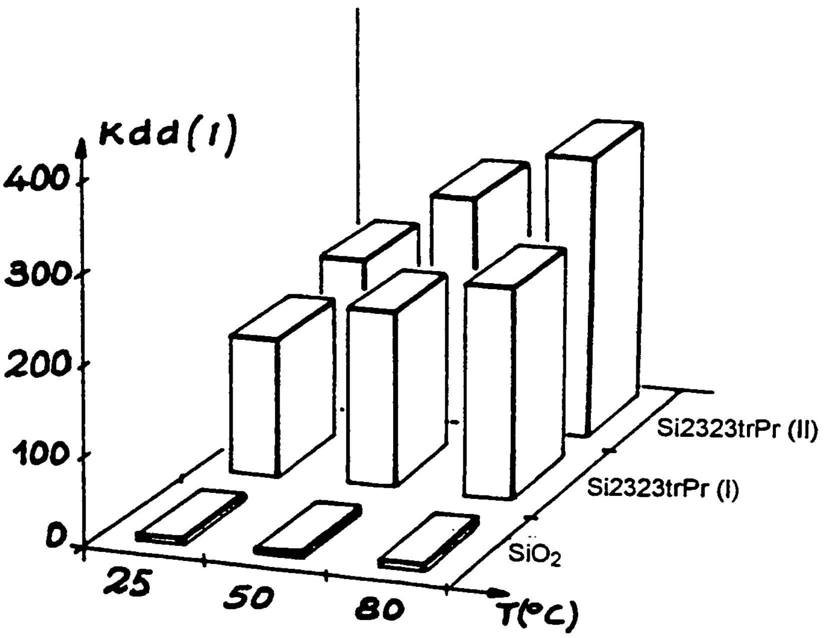
Kdd(l)
400
300
200
100
0
25
50
80
T(°C)
Si2323trPr (II)
Si2323trPr (I)
SiO2

FIG. 7

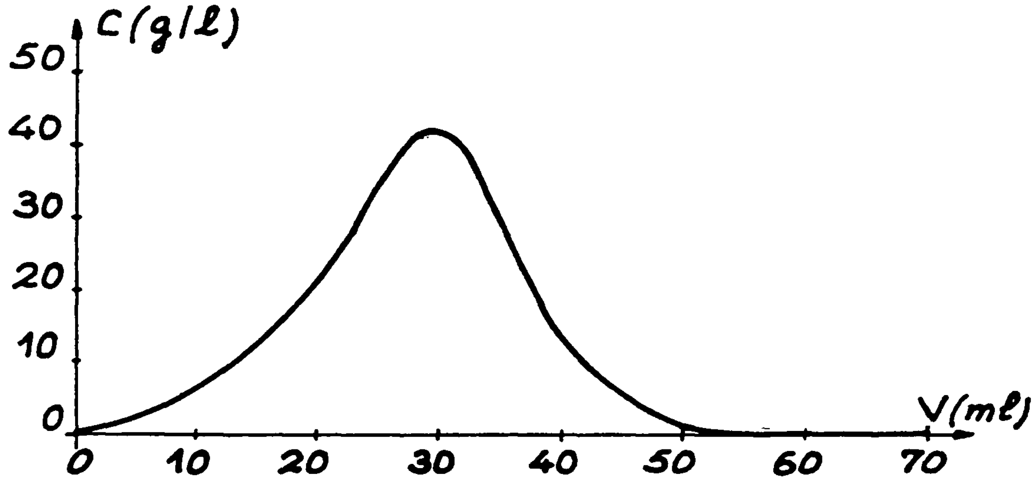
C(g/l)
50
40
30
20
10
0
V(ml)
0
10
20
30
40
50
60
70

FIG. 8

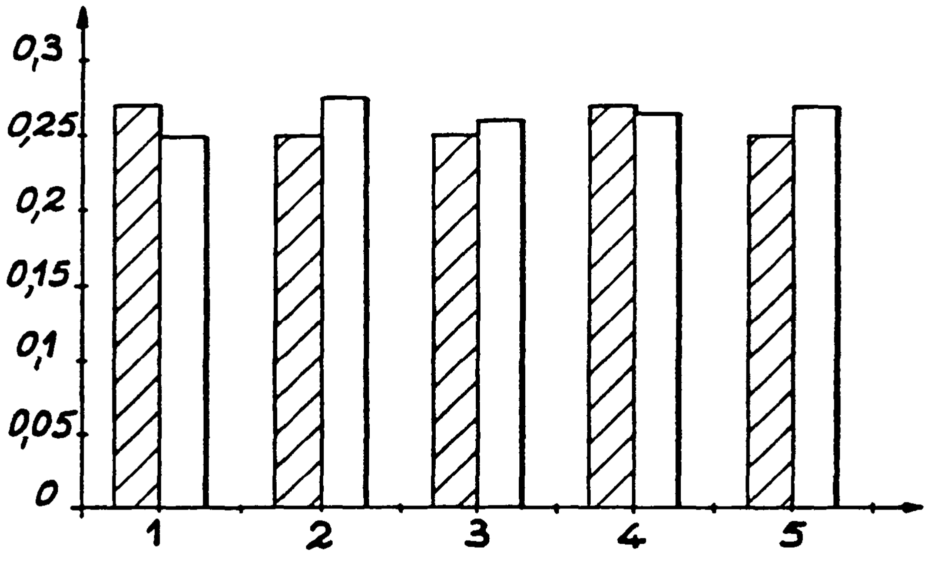
0,3
0,25
0,2
0,15
0,1
0,05
0
1
2
3
4
5

FIG. 9